# EUROPÄISCHE PATENTSCHRIFT

(11) **EP 1 075 439 B1**
(45) Veröffentlichungstag und Bekanntmachung des Hinweises auf die Patenterteilung: **28.08.2002**
(21) Anmeldenummer: 99924787.7
(22) Anmeldetag: 01.04.1999
(51) Int. Cl.: B65G 1/137, B65G 1/04, B65G 1/08

(54) **KOMMISSIONIERANLAGE**
ORDER PICKING SYSTEM
INSTALLATION DE PREPARATION DE COMMANDES

(30) Priorität: 08.04.1998 DE 19815883
(43) Veröffentlichungstag der Anmeldung: 14.02.2001
(73) Patentinhaber: Knapp Logistik Automation GmbH, 8075 Hart bei Graz (AT)
(72) Erfinder: FREUDELSPERGER, Karl, A-8075 Hart bei Graz (AT); PREISS, Manfred, D-90574 Rosstal (DE)
(74) Vertreter: Hanke, Hilmar
(86) Internationale Anmeldenummer: DE9901055
(87) Internationale Veröffentlichungsnummer: WO99052796

(56) Entgegenhaltungen:
- EP-A- 0 794 135
- EP-A- 0 795 495
- US-A- 4 501 528
- PATENT ABSTRACTS OF JAPAN vol. 096, no. 009, 30. September 1996 (1996-09-30) & JP 08 113325 A (TOYO KANETSU KK), 7. Mai 1996 (1996-05-07)

## Beschreibung

Die Erfindung betrifft eine Kommissionieranlage der im Oberbegriff des Patentanspruchs 1 angegeben Art sowie ein Verfahren zum Bereitstellen und Einlagern von Artikeln in einer vorzugsweise vorgenannten Kommissionieranlage.

Bisher werden Füllschächte von Kommissionierautomaten vorwiegend von Hand mit neuen Artikeln beschickt. Der Vorgang ist vergleichsweise kosten- und zeitaufwendig.

Für senkrechte oder nahezu senkrechte von vorne zugängliche Füllschächte eines Kommissionierautomaten ist gemäß EP 0 794 135 ein Befüllen bereits teilweise automatisiert und rationalisiert. Hierbei wird per Automat nicht nur ein Einzel-Artikel, sondern gleich einen ganzer Artikelstapel gleichzeitig im Füllschacht eingelagert. Der Artikelstapel wird dabei in einem speziellen kastenartigen Magazin mit Längsschlitz in einer Längsseitenwand gehandhabt. Das Magazin erfüllt den Zweck, daß der Artikelstapel konsistent zusammengehalten wird, und zwar von der Einlagerungsstelle am Wareneingang bis zum Beschickungsvorgang selbst. Das Magazin ist der Form des Artikels bzw. der Mehrzahl der gestapelten Artikel angepaßt. Nach einem Beschickungsvorgang im Kommissionierautomaten wird das leere Magazin für ein erneutes Befüllen mit Artikeln zum Wareneingang zurückgeführt.

Aufgabe der Erfindung ist die Schaffung einer Kommissionieranlage der eingangs genannten Art, welche mit Hilfe einfacher Mittel ein wirkungsvolles Einlagern von Artikeln in Kommissionierautomaten mit sogenannten Durchlaufregalen und gegebenenfalls auch ein zweckmäßiges Bereitstellen von einzulagernden Artikeln ermöglicht.

Gelöst wird die der Erfindung zugrundeliegende Aufgabe durch die im Anspruch 1 angegebenen Mittel.

Vorteilhaft weitergebildet wird der Erfindungsgegenstand durch die Merkmale der Ansprüche 2 bis 15.

Ein erfindungsgemäßes Verfahren kennzeichnet sich durch die Merkmale der Ansprüche 16 bis 18.

Das Wesen der Erfindung kann bei einer gattungsgemäßen Kommissionieranlage im wesentlichen in der Zuordnung einer besonderen Artikelstapel-Halterung für einen festen, jedoch lösbaren magazinlosen Halt eines Artikelstapels gesehen werden, wobei die Artikelstapel-Halterung raumbeweglich unter Festhaltung des aufgenommenen Artikelstapels so vor den Eingang eines Artikelkanals positioniert werden kann, daß ein unterer oder oberer Einzelausschieber oder durch Schwerkraft ein unterster oder ein oberster Artikel des festgehaltenen Artikelstapels in den ausgewählten Artikelkanal vereinzelt eingeben werden kann.

Aus Patent Abstracts of Japan, vol. 096, no. 009, 30.09.96, und EP-A-0 795 495 sind weitere Kommissionieranlagen bekannt.

Der Gegenstand des vorgenannten japanischen Dokuments betrifft jedoch keine magazinlose Handhabung von Artikelstapeln, sondern es werden die Artikel in Kassetten gehandhabt.

Der Gegenstand des vorgenannten europäischen Dokuments betrifft zwar grundsätzlich magazinlose Handhabung von Artikelstapeln, jedoch nur in ihrer Gesamtheit und speziell bei einem vertikalen Füllschacht, wie dies auch bei der vorerwähnten Kommissionieranlage gemäß EP 0 794 135 der Fall ist.

Eine Artikelstapel-Halterung mit unterem Einzelartikel-Ausschieber weist vorzugsweise eine höhenverstellbare Führung für einen auszuschiebenden untersten Einzelartikel auf.

Bevorzugt besitzt die Artikelstapel-Halterung ein Artikelstapel-Klemmplatten-Paar mit einer Artikelstapel-Aufnahme und einer querverstellbaren Artikelstapel-Längsklemmplatte mit Winkelanschlag, durch welche ein aufgenommener Artikelstapel in Stapelquerrichtung federnd eingespannt werden kann. Der Artikelstapel muß, um eine vertikale Bewegung zu ermöglichen, für ein Vereinzeln gelockert werden, wobei die Längsklemmplatte vorzugsweise Federfinger dergestalt besitzt, daß sich im gelockerten Zustand kein Artikel an den Federfingern verhängen kann, insbesondere durch einen in einer Parkstellung sitzenden längsgerichteten Stab, welcher vorgeschoben wird.

Zweckmäßigerweise weist die in jeder Betriebslage im wesentlichen senkrecht gehaltene Artikelstapel-Halterung ein doppelt geneigtes Winkelblech auf, wobei ein in der Halterung aufgenommener Artikelstapel durch Schwerkraft in der Winkelwurzel seitlich fixiert wird und bodenseitig sich der Artikelstapel entweder auf dem Einzelartikel-Ausschieber oder auf dem hochschiebbaren Artikelstapel-Hochhalter abstützt.

Für eine rationelle Betriebsweise der Kommissionieranlage kann vorgesehen sein, daß die Artikelhandhabe-Vorrichtung nicht nur eine Artikelstapel-Halterung für ein Befüllen des Kommissionierautomaten und gegebenenfalls für eine Entnahme und einen Transport eines Artikelstapels aus und zu Lagern, sondern zusätzlich eine raumbewegliche Artikelhandhabe-Einheit für eine stapelweise Entnahme und einen stapelweisen Transport von Artikeln von einem Wareneingang oder von und zu einem Vorratsregal besitzt, wobei die Artikelhandhabe-Einheit und die Artikelstapel-Halterung vorzugsweise in einer Vertikalstellung zueinander ausrichtbar bzw. positionierbar sind und ein auf der Artikelhandhabe-Einheit aufgenommener Artikelstapel in die Artikelstapel-Halterung durch einen verstellbaren Artikelstapel-Querschieber umlagbar ist.

Insbesondere umfaßt die Artikelhandhabe-Einheit des raumbeweglichen Regalbediengeräts eine bodenseitige Artikelstapel-Aufnahme, einen verstellbaren Artikelstapel-Längsschieber, einen verstellbaren Artikelstapel-Querschieber und eine insbesondere eine Reihe von Federfingern aufweisende verstellbare Artikelstapel-Längsklemmplatte, welche parallel zur und gegenüber der Artikelstapel-Aufnahme liegt und im eingeklemmten Zustand einen ohne Magazin direkt aufgenommenen Artikelstapel durch die Artikelstapel-Längsklemmplatte, insbesondere durch deren Federfinger, in Stapelquerrichtung gegen die Artikelstapel-Aufnahme drückt.

Anstelle der Federfinger können auch andere Klemm-Mittel vorgesehen sein, welche ein örtliches Festklemmen jedes einzelnen Artikels im Artikelstapel besorgen, z.B. eine nachgiebige, rückstellelastische Klemmleiste.

Vorzugsweise ist das Regalbediengerät über ein Führungs- bzw. Schienensystem mit oder ohne Weichen von und zu zumindest einem Vorratsregal verfahrbar und bei einem ausgewählten seitlichen Ende eines Schachts des Vorratsregals, insbesondere eines Winkelblechs, positionierbar, wobei in jedem ausgewählten Schacht ein einziger zu handhabender Artikelstapel angeordnet ist bzw. werden kann und der Artikelstapel durch Verschieben in Stapelrichtung auf eine ausgerichtete Artikelaufnahme der Artikelhandhabe-Einheit gelangt, oder umgekehrt von der Artikelaufnahme in den ausgewählten Schacht gelangt.

Gegebenenfalls können in einem einzigen Schacht bei kleinen Produkten auch zwei dann parallele Artikelstapel eingelagert werden ("Mehrfachlastaufnahme").

Das Vorratsregal kann ein Übervorratsregal sein, welches dem Kommissionierautomaten zugeordnet ist und sich vorzugsweise in der Nähe des Artikelregals des Kommissionierautomaten befindet.

Das Vorratsregal kann aber auch ein Zwischenpuffer sein, welcher dem Wareneingang zugeordnet ist und sich vorzugsweise in der Nähe der Auspackstation befindet, an welcher die Artikelstapel aus einem Überkarton ausgepackt und zusammengestellt werden.

Bevorzugt sind sowohl ein oder mehrere Übervorratsregale als auch ein oder mehrere Zwischenpuffer je nach Größe der Kommissionieranlage und örtliche Raumbedingungen vorhanden, wie auch mehrere Kommissionierautomaten vorhanden sein können.

Die erfindungsgemäße Kommissionieranlage läßt sich also in weiten Grenzen beliebig gestalten und insbesondere auch in der Zukunft ohne Schwierigkeiten erweitern.

Die ausgepackten Artikelstapel werden zweckmäßigerweise auf einer Artikelstapel-Ablage zusammengestellt, welche die Form eines Teiles zumindest einer Regalebene des Vorratsregals aufweist, insbesondere Winkelbleche sind, wobei das Regalbediengerät für eine Artikelstapelübernahme durch Verschieben auch zur Artikelstapel-Ablage über das Schienen- bzw. Führungssystem verfahrbar und bei dieser ArtikelstapelAblage, insbesondere bei einem seitlichen Ende eines Winkelblechs, positionierbar ist.

Für eine Positionierung zum Regalbediengerät kann auch die Artikelstapel-Ablage verschieblich, insbesondere auf einem Förderband oder auf einer Rutsche verschieblich, und/oder um eine Vertikalachse um vorzugsweise 90° oder 180° drehbar sein.

Die Artikelstapel-Ablage kann auch ein höhenverstellbares Regal mit herausziehbaren Schubladen sein, welche manuell oder automatisch bedienbar sein können.

Für ein Verstellen der Artikelstapel-Ablage kann gegebenenfalls ein Hand- oder Fußschalter von einer Bedienungsperson betätigt werden.

Die Kommissionieranlage läßt sich vollautomatisch auch so konzeptionieren, daß wareneingangsseitig ein Auspackautomat mit einem Greifarm vorgesehen ist, welcher jeweils einen vorzugsweise horizontalen Artikelstapel aus einem geöffneten Überkarton ergreift und auf der Artikelstapel-Ablage ablegt.

Auch das Öffnen und Anliefern des Überkartons kann gegebenenfalls per Maschine erfolgen.

Ein besonderes zweckmäßig gestaltetes Vorratsregal besitzt in ein oder mehreren übereinander angeordneten Ebenen jeweils nebeneinander angeordnete Winkelbleche.

Jedes Winkelblech kann horizontal verlaufen, ist jedoch in besonders hervorzuhebender Weise doppelt geneigt dergestalt, daß eine im Querschnitt rechtwinklige und in Längsrichtung schräge Rinne ausbildet ist, wobei die Winkelwurzel in jedem Längsquerschnitt der Rinne an tiefster Stelle liegt und beide Winkelschenkelflächen Anschlagflächen für einen aufgenommenen Artikelstapel sind, und ferner am tiefsten Rinnenende ein lösbarer, vorzugsweise niederdrückbarer Artikelanschlag vorgesehen ist.

Der lösbare Artikelanschlag kann nicht nur fremdbetätigt, sondern eigenbetätigt sein, z.B. durch einen Hubmagneten. Auch kann der Artikelanschlag starr sein. In diesem Fall werden bei einer Verschiebung eines Artikelstapels die Artikel mit einer geeigneten Vorrichtung darübergehoben.

In einer Erfindungsvariante beträgt die Neigung der Rinne in Längsrichtung ca. 20° und die Neigung der Rinnenbasisfläche in Querrichtung ca 15°. Je schräger die Rinnenneigung in Längsrichtung, desto größer die eigenständige Rutschfähigkeit des auflastenden Artikelstapels in der Rinne. Es hat sich gezeigt, daß im praktischen Betrieb bei vorgenannten Neigungsgrößen ein Artikelstapel mit Vorteil hinter- bzw. oberseitig mit einem Rollwagen stabil gehalten wird und zufriedenstellend in der Rinne rutscht, wenn eine Artikelstapel-Verlagerung im System der Kommissionieranlage vorgenommen wird. Die Querneigung von 15° fixiert einen Artikelstapel immer in der Winkelwurzel der Rinne.

Es kann also eine Längsfixierungshilfe in der Rinne vorgesehen sein, welcher den Artikelstapel gegen den Artikelanschlag drückt.

Die Längsfixierungshilfe ist zweckmäßigerweise der Rollwagen, ein längsverstellbarer angetriebener Artikelanschlag oder ein federvorgespannter Artikelanschlag.

Es sei hervorgehoben, daß in der vorgenannten winkligen doppelt geneigten Rinne unterschiedliche Artikelgrößen als Stapel in der Winkelwurzel fixiert gehalten werden können. Es genügt kubische Form. Mithin kann ein einziges Winkelblech für unterschiedliche Artikel verwendet werden, ohne daß die Gesamtanlage umgebaut werden muß.

Das Vorratsregal kann auch ein platzsparendes Doppelregal sein, welches Rücken an Rücken angeordnet ist.

Zweckmäßigerweise besitzt die Artikelhandhabe-Einheit des Regalbediengeräts einen Andockzapfen, welcher in eine entsprechende Aussparung bei einem ausgewählten Schacht eines Vorratsregals als Zentrierungshilfe in Eingriff bringbar ist.

Grundsätzlich gibt es jedoch mehrere Positionierprinzipien:
1) Zum einen kann die Positionierwiederholgenauigkeit des Regalbediengeräts ausgenützt werden.
2) Zum anderen kann die Feinpositionierung wie vorgenannt mechanisch über einen Andockzapfen erfolgen.
3) Schließlich kann die Feinpositionierung sensorisch über eine geeignete Sensorik erfolgen, wobei auch alle vorgenannten Kombinationsmöglichkeiten denkbar sind.

Auch kann die Artikelhandhabe-Einheit einen Anschlag, insbesondere ein Röllchen besitzen, welcher bzw. welches mit dem Artikelstapel-Anschlag eines Schachts für ein Lösen bzw. Niederdrücken des Artikelstapel-Anschlags in Eingriff bringbar ist, wobei der Anschlag der Artikelhandhabe-Einheit auch der verstellbare Längsschieber selbst sein kann.

Eine Kommissionieranlage, welche ohne gesonderte Magazine für einzulagernde Artikelstapel auskommt, kennzeichnet sich insbesondere dadurch, daß die Artikelstapel-Aufnahme des Regalbediengeräts, die Schacht- bzw. Winkelblechausbildung des Übervorratsregals, des Zwischenpuffers und der ArtikelstapelAblage beim Wareneingang hinsichtlich Länge, Breite und gegebenenfalls Neigung (Längsneigung, Querneigung) gleich ausgebildet sind.

Die Winkelblechausführung des Übervorratsregals kann aber auch unterschiedlich groß ausgebildet sein. Vorzugsweise bestimmt man möglichst wenig Klassen, um unterschiedlich große Artikel möglichst dicht einlagern zu können, wobei die Artikelstapel-Aufnahme des Regalbediengeräts immer gleich bleibt (entsprechend der größten Rasterung).

Eine besonders zweckmäßige Erfindungsvariante eines Regalbediengeräts sieht vor, die Artikelhandhabe-Einheit über eine Schwenkachse auf einem Schlitten zu befestigen, welcher auf einer Querschiene mit einer Neigung der Schachttiefe bzw. Schachtlängsrichtung des Vorratsregals, insbesondere ca. 20°, querverschieblich ist, wobei die Querschiene fest auf einem vertikal verschieblichen Hubschlitten des Regalbediengeräts befestigt ist.

Die Querschiene kann auch als Teleskop ausgeführt sein, dergestalt, daß sie in einer feststehenden Teleskopiereinheit verfahren werden kann.

Der besondere Vorteil dieser Variante ist, daß man mit wenig Achsen für eine Positionierung der Artikelhandhabe-Einheit auskommt (schachtparallele Achse inklusive zwei elektrische Zylinder für die Anlenkung). Auch benötigt man nur zwei Schieber (Längs- und Querschieber).

Eine andere nicht minder zweckmäßige Ausgestaltung eines Regalbediengeräts kennzeichnet sich dadurch, daß die Artikelhandhabe-Vorrichtung zweigeteilt ist und eine separate höhenverstellbare Artikelstapel-Aufnahmeeinheit mit mehreren Winkelblechen nach Art, Lage und Größe der Artikelstapel-Aufnahme bzw. des Vorratsregals aufweist, welche zumindest einen eigenen verstellbaren zweiten Artikelstapel-Längsschieber besitzt, wobei durch die Artikelstapel-Aufnahmeeinheit mehrere Artikelstapel vom Zwischenpuffer oder von der Artikelstapel-Aufnahme zum Übervorratsregal förderbar sowie ein- und auslagerbar sind, sowie eine separate höhenverstellbare Artikelregal-Beschickungseinheit aufweist, welche ihrerseits zweigeteilt ist und zum einen eine höhenverstellbaren Einzel-Artikelstapel-Aufnahme mit dem Artikelstapel-Längsschieber und einem Artikelstapel-Querschieber und zum anderen eine raumbewegliche Greifereinheit bzw. Artikelhalterung mit der bodenseitigen Artikelstapel-Aufnahme, der Artikelstapel-Längsklemmplatte mit Winkelanschlag und höhenverstellbarem Fühler für einen auszuschiebenden untersten Artikel sowie den Einzelartikel-Ausschieber besitzt, wobei durch die ArtikelregalBeschickungseinheit ein einziger ausgewählter Artikelstapel vom Vorratsregal (Übervorratsregal, Zwischenpuffer) oder von der Artikelstapel-Ablage des Wareneingangs zum Kommissionierautomaten förderbar und dort jeder Artikel einzeln durch die Artikelhalterung in einen ausgewählten schrägen Artikelkanal des Kommissionierautomaten einlagerbar ist.

Grundsätzlich ist es auch denkbar, daß bei einem Arbeitsspiel mehrere Artikelstapel vom Vorratsregal am Regalbediengerät zwischengepuffert und nacheinander im Kommissionierautomaten eingelagert werden können.

Für ein Einlagern der Artikel in den Kommissionierautomaten ist zweckmäßigerweise der Artikelstapel durch die Einzel-Artikelstapel-Aufnahme vom Vorratsregal in Stapellängsrichtung durch Verschieben mit dem Artikelstapel-Längsschieber entnehmbar und zum Kommiossionierautomaten förderbar und nach einem Umsetzen bzw. Querverschieben des Artikelstapels von der Einzel-Artikelstapel-Aufnahme durch den ArtikelstapelQuerschieber auf die bodenseitige Artikelstapel-Aufnahme der ausgerichteten Greifereinheit (oder durch direkte Übernahme durch die Greifereinheit) und nach einem Festklemmen des gesamten Artikelstapels in Stapelquerrichtung durch die Federfinger-Längsklemmplatte beim ausgewählten Kanal des Kommissionierautomaten durch Bewegen der Greifereinheit positionierbar und vereinzelt einlagerbar.

Die Greifereinheit ist bevorzugt über eine Drehachse an einem höhenverstellbaren Hubschlitten befestigt, welcher seinerseits an einer bodenseitig um zwei zueinander senkrechte Achsen angelenkte Vertikalstange des Regalbediengeräts höhenverschieblich ist.

Die Vertikalstange weist zweckmäßigerweise eine kürzere Länge auf als die Vertikalstange, an welcher die Einzel-Artikelstapel-Aufnahme und die Artikelstapel-Aufnahmeeinheit höhenverschieblich sind. Der Grund hierfür ist, daß die Höhe eines Übervorratregales ca. 5,5m betragen kann, während die Höhe des Kommissionierautomaten bei ca. 2,5m liegt (wobei die Höhe eines Durchlaufregals, welche gegenwärtig bei ca. 2,0m liegt, zukünftig bei automatischer Nachfüllung deutlich größer gewählt werden kann, eventuell mit Einführung einer zweiten Ausgabe-Ebene inklusive höher gelegenem Zentralförderband).

Die 2,5m lange Achse kann auch Bestandteil der Hauptachse sein und in Form einer Tandemachse mit dieser verbunden sein.

Der besondere Vorteil der zweiten Ausführungsvariante ist, daß die Kommissionierautomat-Befüllungseinheit eine ausreichend lange (ca. 2,5m) Achse besitzt, durch die ein Verschieben der Greifereinheit längs des Kanals erleichtert wird. Die eigentliche Vertikalachse oder -Stange des Regalbediengeräts trägt nur die Aufnahmeeinheit (mehrere Artikelstapel auf der einen Seite - einen einzigen Artikelstapel auf der anderen Seite), welche für hohe Vorratsregale (im Bereich von ca. 5,5m) ebenfalls geeignet ist.

Auch auf der anderen Seite sind mehrere Artikelstapel zum Zwischenpuffern denkbar. Die Artikelstapelaufnahmeeinheit kann auch um eine vertikale Achse um 180° drehbar sein, um doppelseitige Regale bedienen zu können.

Bei der zweiten Ausführungsvariante kann es vorteilhaft sein, für das Wareneinlagern und Beschicken zwei getrennte Geräte zu verwenden, da die Vorgänge unterschiedliche Prioritäten haben können und somit mit einer geringeren Anzahl an Geräten auszukommen ist.

Bei jeder der vorgenannten grundsätzlichen Ausführungsvarianten der Artikelhandhabe-Vorrichtung ist es zweckmäßig, wenn das unmittelbare Einlagern in einen schrägen Kanal eines Kommissionierautomaten nach Lösen des Klemmschlusses des Artikelstapels durch geringfügiges Zurückversetzen der Längsklemmplatte bei gleichzeitigem Ausschieben eines untersten oder obersten Einzelartikels durch den Einzelartikel-Ausschieber der Artikelstapel-Halterung des Regalbediengeräts erfolgt. Der einzulagernde (nahezu oder exakt in Vertikalrichtung positionierte) Artikelstapel wird dann in der Artikelstapel-Halterung in Vertikalrichtung verschieblich geführt gehalten, und zwar durch eine höhenverstellbare Einzelartikel-Ausschiebeführung oder einen Artikelstapel-Hochhalter und/oder beispielsweise durch einen Winkelanschlag bei der Längsklemmplatte.

Um den Artikelstapel in Vertikalrichtung verschieblich zu halten, kann auch eine Sicherung in Form einer Vorrichtung vorgesehen sein, welche ein Verhängen eines Artikels in der Federfinger-Längsklemmplatte verhindert, zum Beispiel ein Rundstab, welcher aus einer Parkstellung vor die Federfinger geschoben werden kann.

Durch die Erfindung wird ein Verfahren zum Bereitstellen und Einlagern von Artikeln in einer Kommissionieranlage geschaffen, mit zumindest einem Kommissionierautomaten, der zumindest ein Artikelregal mit nebeneinander und übereinander angeordneten, gegen die Horizontale geneigten Artikelkanälen aufweist, in denen zu kommissionierende Artikel gelagert werden können, wobei jeder Artikelkanal an seinem tiefer gelegenen einen Längsende eine Einrichtung zum Anhalten und Ausgeben der Artikel und an seinem höher gelegenen anderen Längsende auf der Regalbefüllungsseite mit neuen Artikeln befüllbar ist, und sich das Verfahren besonders dadurch kennzeichnet, daß ein dem Artikelregal zugeordnetes verfahrbares Regalbediengerät mit einer raumbeweglichen Artikelhandhabe-Vorrichtung mit einer Arcikelstapel-Halterung in einer im wesentlichen senkrechten Stellung der Halterung mit einem in der Halterung aufgenommenen entsprechend senkrechten Artikelstapel bei einem ausgewählten höher gelegenen Längsende eines Artikelkanals auf der Regalbefüllungsseite positioniert wird, wobei durch einen in Stapelquerrichtung verschiebbaren unteren Einzelartikel-Ausschieber der unterste Artikel des Artikelstapels der Halterung in den ausgewählten Artikelkanal eingeschoben wird, oder alternativ durch einen hochschiebbaren Artikelstapel-Hochhalter ein oberster Artikel eines hochgeschobenen entweder schräggestellten Artikelstapels durch Schwerkraft oder durch einen in Stapelquerrichtung verschiebbaren oberen Einzelartikel-Ausschieber in den ausgewählten Artikelkanal eingebracht wird.

Darüberhinaus kann gegebenenfalls das Regalbediengerät für einen Transport von kompletten Artikelstapeln vom Wareneingang und/oder von und zu Vorratslagern verwendet werden. Die beim Kommissionierautomaten positionierten Artikelstapel werden jedoch Artikel für Artikel dem Kommisionierautomaten zugeführt, wobei in einer Ausführungsvariante für eine vereinzelte Artikelzuführung vorher der Artikelstapel von einer Vorrichtung (Artikelhandhabe-Einheit) auf eine andere Vorrichtung (Artikelstapel-Halterung) umgelagert werden kann, jedoch auch eine einzige Vorrichtung des Regalbediengeräts bei entsprechender Konzipierung der Halterung/Greifereinheit und des (gegebenenfalls versetzbaren) Einzelartikel-Ausschiebers bzw. des (gegebenenfalls versetzbaren) ArtikelstapelHochhalters oder der (versetzbaren) Führung für einen unteren auszuschiebenden Einzelartikel sämtliche vorgenannten Vorgänge durchführen kann.

Wird zum Beispiel bei einem Transportvorgang der Einzelartikel-Ausschieber gerade nicht benötigt, kann er von der Artikelstapel-Halterung z.B. weggeschwenkt und an dieser Stelle beispielsweise ein (ebenfalls versetzbarer) Artikelstapel-Längsschieber gerade angeordnet bzw. in Funktion sein.

Durch die Erfindung kann komplett auf gesonderte Artikelstapel-Magazine (im Gegensatz zum eingangs genannten Stand der Technik) verzichtet werden. Derartige Magazine brauchen mithin weder produziert, noch einem besonderen Artikelstapel angepaßt, noch innerhalb des Systems der Kommissionieranlage befördert, insbesondere vom Kommissionierautomaten zum normalerweise weit entfernten Wareneingang als Leergut zurückgefördert zu werden. Die Kommissionieranlage gestattet eine günstige Arbeitsplatzgestaltung beim Wareneingang. Dort können, sowie ein Lastkraftwagen die Überkartons mit den Artikeln anliefert (z.B. den Tageskommissionierbedarf an Artikeln), die Kartons schnell und effektiv kurzzeitig von mehreren Personen gleichzeitig ausgepackt und die Artikelstapel zusammengestellt werden, etwa in einer Frühschicht. Gleichwohl besorgen das oder die Regalbediengeräte (normalerweise über den Arbeitstag hinweg) die Verteilung und die Einlagerung der Artikel stapelweise an benötigter Stelle im Kommissionierautomaten oder an optimierter Stelle innerhalb des Systems der Anlage unter Ausnützung von Vorratsregalen in Form von Übervorratsregal(en) und/oder Zwischenpuffer(n), die nahezu beliebig für eine Erweiterung oder Änderung der Kommissionieranlage ergänzt oder umgestellt werden können.

Die Erfindung wird nachfolgend anhand von Ausführungsbeispielen unter Bezugnahme auf die beigefügte Zeichnung näher beschrieben; es zeigen:
- Fig. 1: eine Kommissionieranlage mit Kommissionierautomaten, schienengebundenen Regalbediengeräten. Übervorratsregalen, Zwischenpuffer und Auspackstation in einer schematischen Draufsicht,
- Fig. 2: eine Kommissionieranlage im Bereich der Auspackstation in einer schematischen Draufsicht ähnlich Figur 1
- Fig. 3: ein Regalbediengerät nach Figur 1 gemäß einer ersten Ausführungsvariante mit einer Artikelstapel-Halterung in einer Befüllstellung des Kommissionierautomaten in einer schematischen perspektivischen Ansicht,
- Fig. 4: das Regalbediengerät der Figur 3 mit einer Artikelstapel-Halterung in einer Artikelstapel-Verschiebestellung,
- Fig. 5: die Artikelstapel-Halterung nach Figur 3 mit zwei schrägen Artikelkanälen eines Kommissionierautomaten,
- Fig. 6: eine Artikelstapel-Halterung mit unterem Einzelartikel-Ausschieber während einer Artikelkanalbefüllung schematisch in einer Seitenansicht,
- Fig. 7: eine Artikelstapel-Halterung mit oberem Einzelartikel-Ausschieber während einer Artikelkanalbefüllung ähnlich Figur 6,
- Fig. 8: eine Artikelstapel-Halterung mit oberer selbsttätiger Artikelkanalbefüllung und hochschiebbarem Artikelstapel-Hochhalter,
- Fig. 9: zwei Kommissionierautomaten und Übervorratsregale nach Figur 1 mit einem anderen Regalbediengerät in einer Regalgasse schematisch in einer Stirnansicht,
- Fig. 10: das Regalbediengerät nach Figur 9 mit raumbeweglicher Artikelstapel-Halterung und raumbeweglicher Artikelhandhabe-Einheit unmittelbar nach einem Verschieben eines Artikelstapels in Stapelrichtung aus einem Übervorratsregal auf die Artikelhandhabe-Einheit,
- Fig. 11: das Regalbediengerät nach den Figuren 9 und 10 in einer Mittelstellung der im wesentlichen senkrechten Artikelstapel-Halterung und der schrägen Artikelhandhabe-Einheit mit aufgenommenen Artikelstapel für einen Transport des Artikelstapels in der Regalgasse,
- Fig. 12: das Regalbediengerät nach Figur 11 nach einem Artikelstapel-Transport unmittelbar vor Übergabe des im wesentlichen senkrechten, insbesondere leicht schrägen Artikelstapels mit Parallelanordnung der Artikel-Stapel-Halterung und der Artikelhandhabe-Einheit,
- Fig. 13: die Übergabe eines untersten Artikels des in der Artikelstapel-Halterung aufgenommenen Artikelstapels in einen Artikelkanal des Kommissionierautomaten mit unterer Einzelartikel-Ausschiebe-Führung und unterem Einzelartikel-Ausschieber,
- Fig. 14: eine Artikelstapel-Halterung mit Winkelblech für eine seitliche Abstützung eines aufgenommenen Artikelstapels,
- Fig. 15: einen Teil des Übervorratsregals nach Figur 9 gesehen in einer schematischen Seitenansicht von der Regalgasse,
- Fig. 16 eine Auspackstation mit Zwischenpuffer und dazwischen angeordnetem Regalbediengerät in einer schematischen Vertikalansicht,
- Fig. 17: die Auspackstation nach Figur 16 gesehen schematisch von oben,
- Fig. 18: die Artikelhandhabe-Einheit nach den Figuren 9 bis 13 perspektivisch im Bereich ihrer Artikelstapel-Aufnahme,
- Fig. 19,: 20, 21 und 22 den Andockvorgang der Artikelhandhabe-Einheit nach Figuren 9 an ein Übervorratsregal in vier Ablaufstellungen schematisch in vertikalen Teilschnitten,
- Fig. 23: die Artikelhandhabe-Einheit nach Figur 22 unmittelbar nach Aufnahme des Artikelstapels in einer perspektivischen Ansicht,
- Fig. 24: die Artikelhandhabe-Einheit nach Figur 23 unmittelbar nach einem Klemmen des Artikelstapels durch Querverschiebung einer Längsklemmplatte, ähnlich Figur 10,
- Fig. 25: eine Auspackstation mit Zwischenpuffer in einer schematischen Vertikalansicht ähnlich Figur 16, und
- Fig. 26: die Auspackstation nach Figur 25 in einer schematischen Draufsicht ähnlich Figur 17.

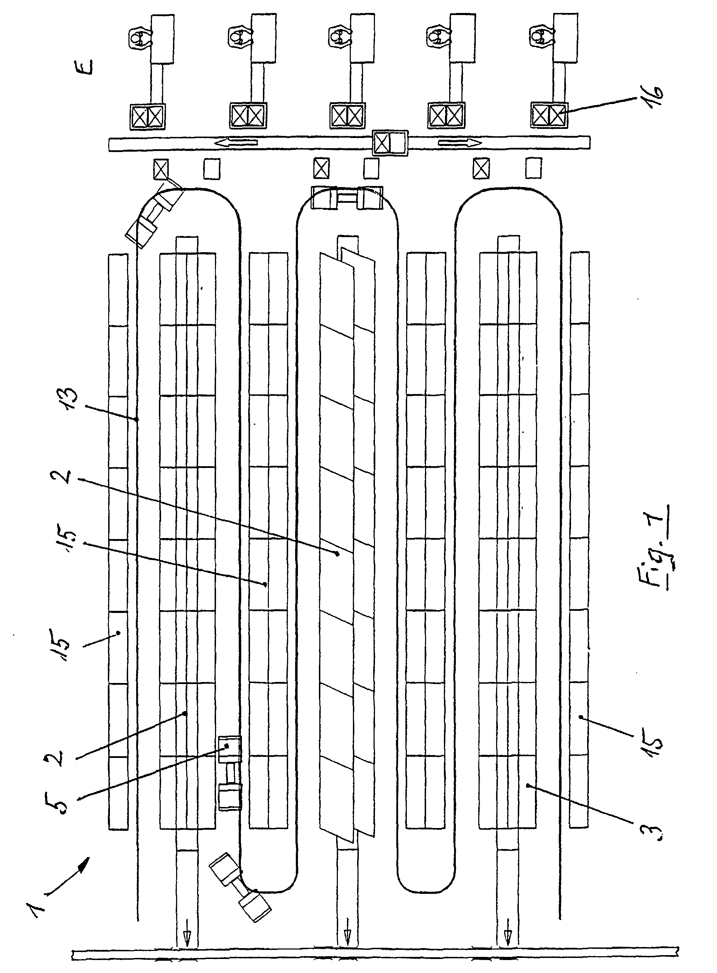

In Fig. 1 ist schematisch in Draufsicht eine Kommissionieranlage 1 mit drei Kommissionierautomaten 2, vier Übervorratsregalen 15 und fünf Arbeitsplätzen am Wareneingang E mit Artikelstapel-Ablagen und Zwischenpuffer 16 gezeigt, wobei über ein Führungs- bzw. Schienensystem 13 vier Regalbediengeräte 5 zwischen den einzelnen Bereichen verfahrbar sind.

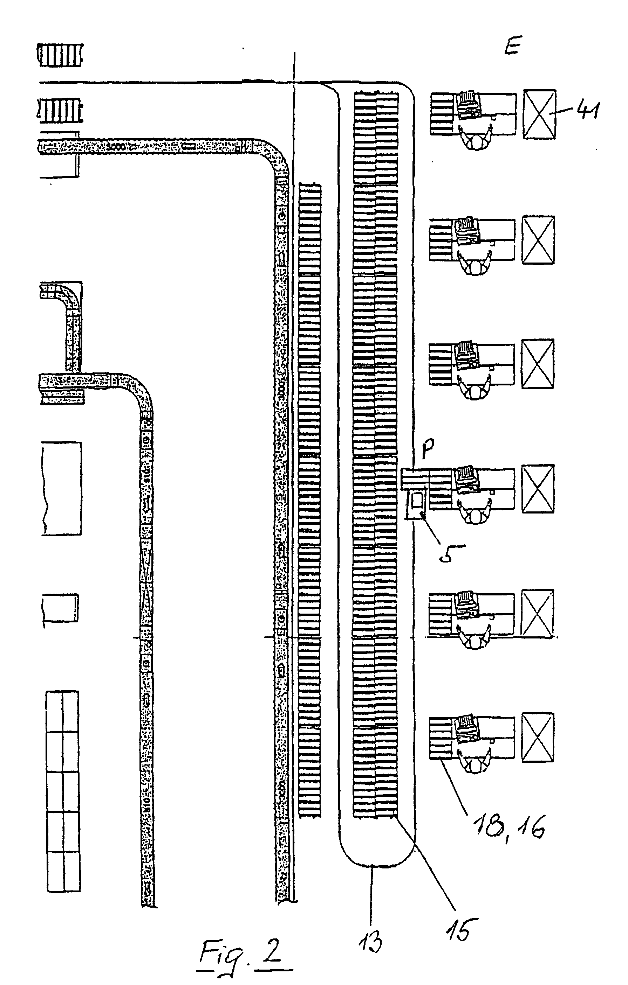

Eine weitere Variante des Systems ist bezüglich des Wareneingangs E in Fig. 2 gezeigt.

Jeder Kommissionierautomat 2 weist mehrere Artikelregale 3 mit nebeneinander und übereinander angeordneten, gegen die Horizontale geneigten Artikelkanälen 4 auf, in denen zu kommissionierende Artikel gelagert werden können, wobei jeder Artikelkanal 4 an seinem einen tiefer gelegenen Längsende eine Einrichtung zum Anhalten und Ausgeben der Artikel und an seinem anderen höher gelegenen Längsende auf der Regalbefüllungsseite B mit neuen Artikeln befüllbar ist.

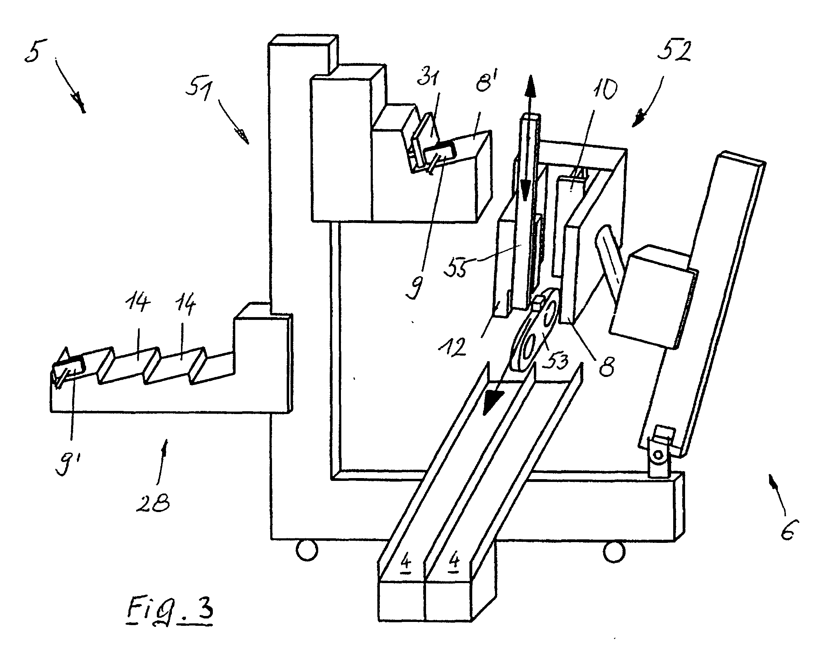

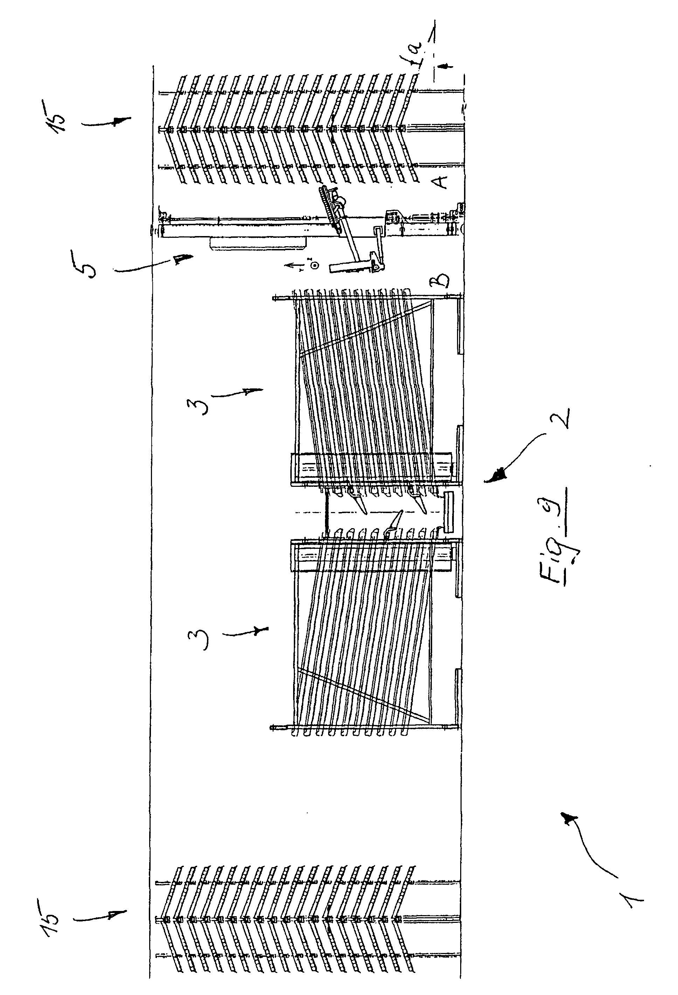

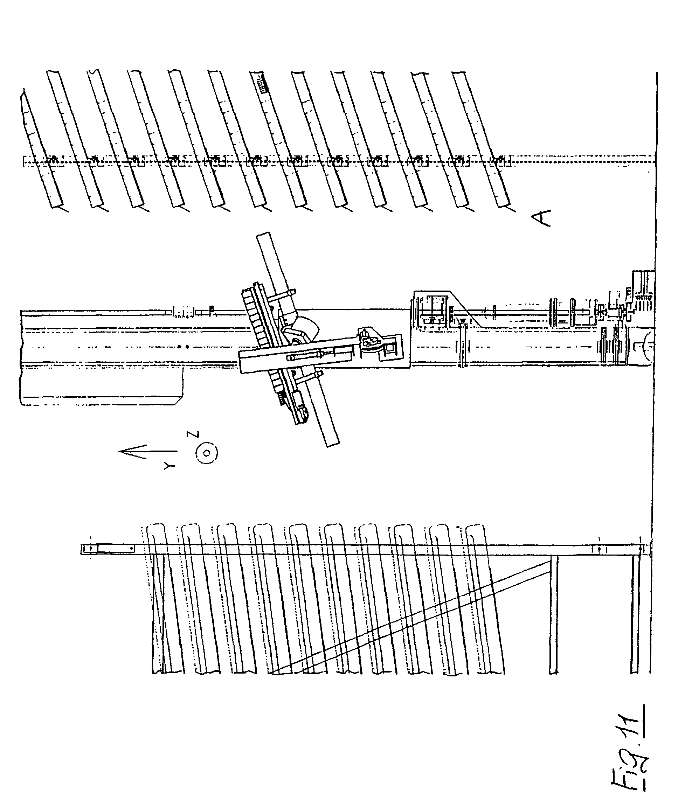

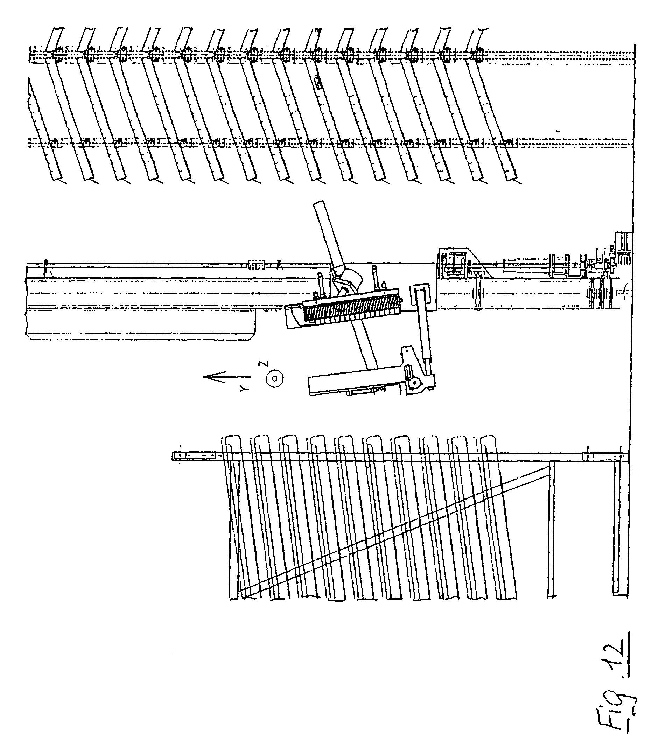

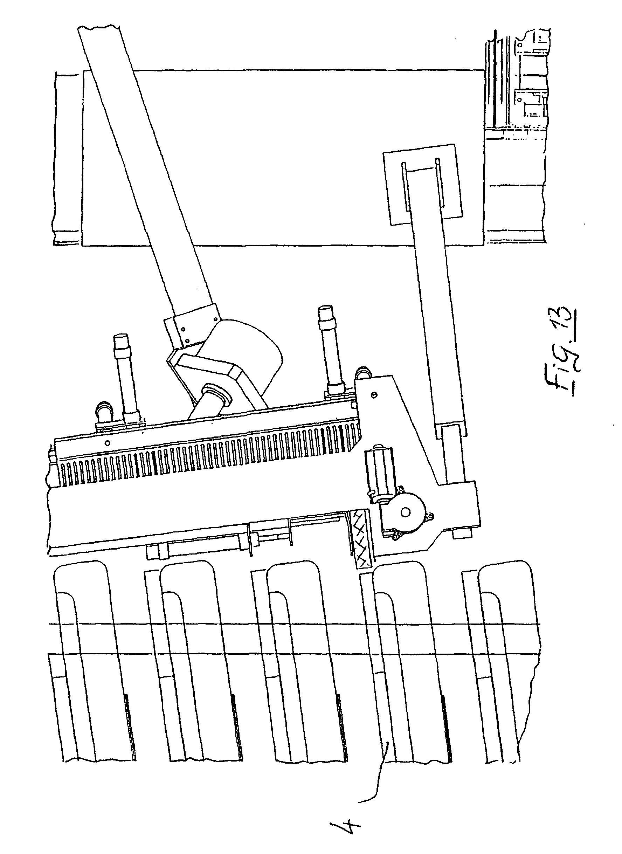

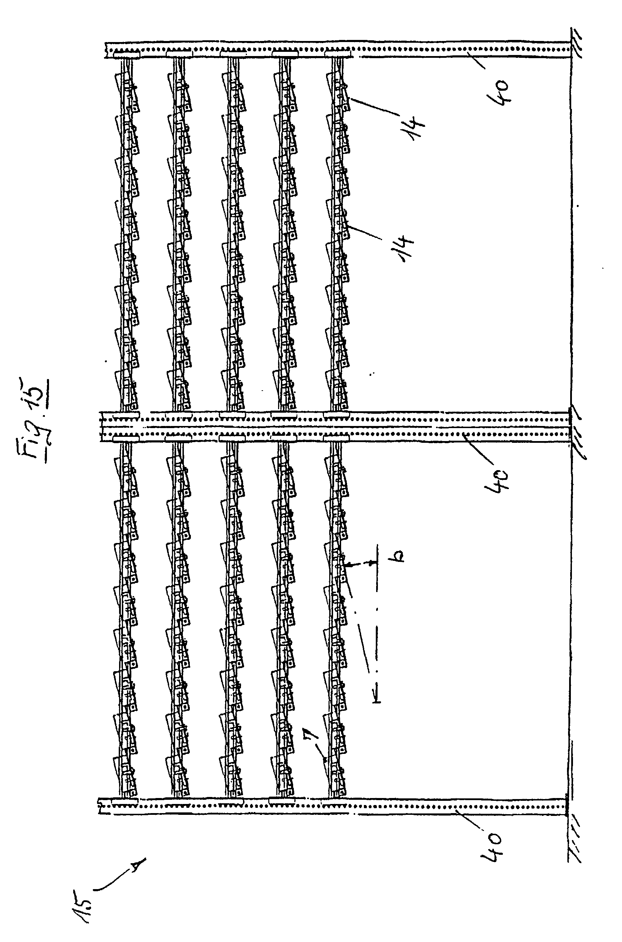

Die Regalbediengeräte 5, beispielsweise gemäß den beiden grundsätzlichen Varianten nach den Fig. 3 bis 8 einerseits und nach den Fig. 9 bis 14 andererseits, besitzen jeweils eine raumbewegliche Artikelhandhabe-Vorrichtung 51 mit einer Artikelstapel-Halterung 52, welche in einer im wesentlichen senkrechten Stellung mit einem in der Halterung aufgenommenen entsprechend senkrechten Artikelstapel bei jedem höher gelegenen Längsende eines Artikelkanals 4 auf der Regalbefüllungsseite B eines Kommissionierautomaten 2 positionierbar ist, und zwar durch Wiederholgenauigkeit des Regalbediengeräts, durch eine geeignete mechanische Feinzentrierung, durch eine sensorische Hilfe der Feinzentrierung oder durch eine Kombination aus den vorgenannten drei Positionierprinzipien.

Die Artikelstapel-Halterung 52 weist in einzelnen Varianten einen in Stapelquerrichtung verschiebbaren unteren (oder oberen) Einzelartikel-Ausschieber 53 auf, durch welchen der unterste (oder oberste) Artikel des Artikelstapels 7 der Halterung in den ausgewählten Artikelkanal 4 einschiebbar ist.

Ist der Einzelartikel-Ausschieber 53 oben angeordnet, wird von einem unten angeordneten hochschiebbaren Artikelstapel-Hochhalter 54 der Artikelstapel 7 immer nach oben gegen den Ausschieber 53 gedrückt und der Artikelstapel "hoch gehalten". Der Artikelstapel-Hochhalter schiebt nach Ausschieben eines Einzelartikels immer um die Artikelhöhe den Artikelstapel hoch, wobei die Artikelhöhe von Artikel zu Artikel unterschiedlich sein kann.

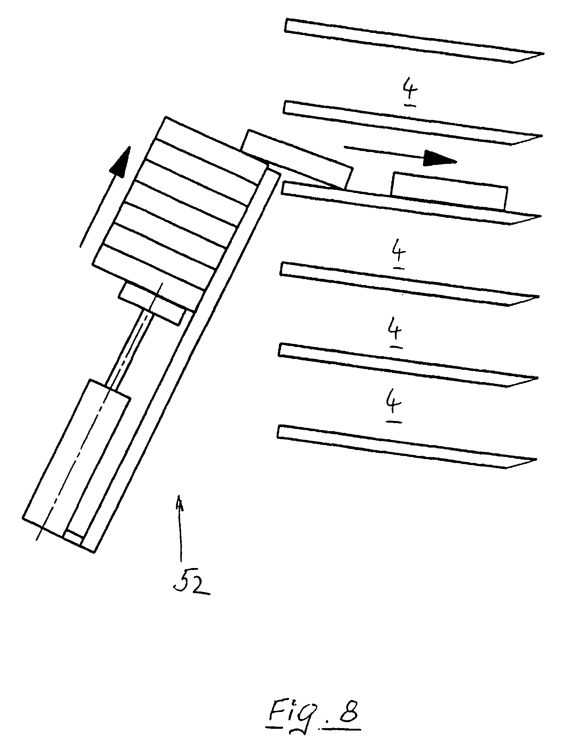

In letztgenannter Ausführungsvariante kann auf den oberen Einzelartikel-Ausschieber verzichtet werden, wenn - bei entsprechender Schrägstellung des Artikelstapels gemäß Fig. 8 ein hochgeschobener Artikelstapel den obersten Artikel aus der Artikelstapel-Halterung 52 nach oben schiebt und dieser oberste Artikel selbsttätig durch Schwerkraft in den ausgewählten Artikelkanal 4 gelangt.

Bei einer Artikelstapel-Halterung 52 mit unterem Einzelartikel-Ausschieber 53 ist bevorzugt auch eine höhenverstellbare Führung 55 für einen unteren auszuschiebenden Einzelartikel vorgesehen. Ähnlich wie bei einem vorgenannten Artikelstapel-Hochhalter, so muß auch die vorgenannte Führung auf die entsprechende Artikelhöhe eingestellt werden.

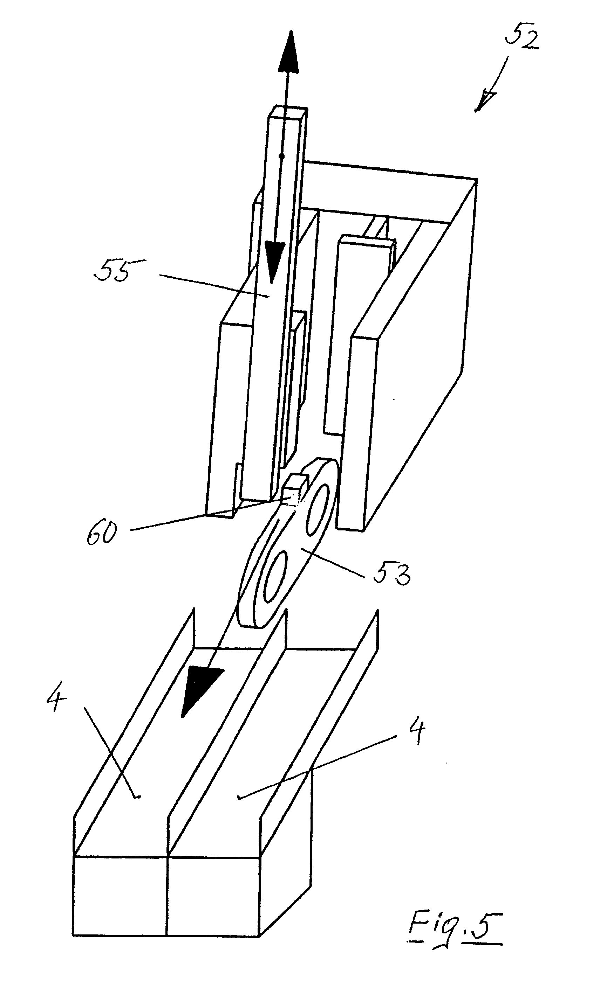

Die Artikelstapel-Halterung 52 kann gemäß Fig. 5 ein Artikelstapel-Klemmplatten-Paar mit einer Artikelstapel-Aufnahme 8 und einer querverstellbaren Artikelstapel-Längsklemmplatte 12 aufweisen, welche einen aufgenommenen Artikelstapel 7 in Stapelquerrichtung Q beispielsweise bei einem Verfahren des Regalbediengeräts federnd einspannt.

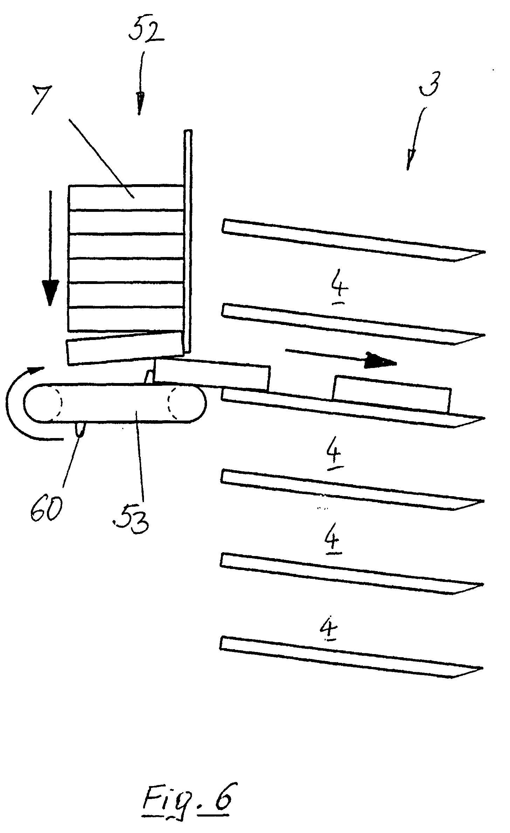

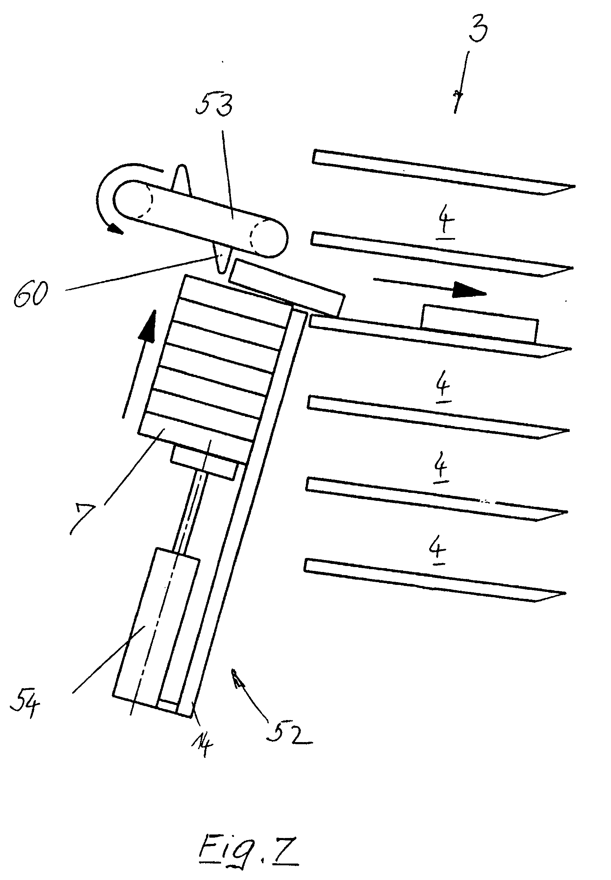

Die in jeder Betriebslage im wesentlichen senkrecht gehaltene Artikelstapel-Halterung 52 kann alternativ gemäß den Fig 6,7 auch ein doppelt geneigtes Winkelblech 14 aufweisen, wobei ein in der Halterung aufgenommener Artikelstapel 7 durch Schwerkraft in der Winkelwurzel seitlich fixiert wird und bodenseitig sich der Artikelstapel entweder auf dem Einzelartikel-Ausschieber 53 oder auf dem hochschiebbaren Artikelstapel-Hochhalter 54 abstützt.

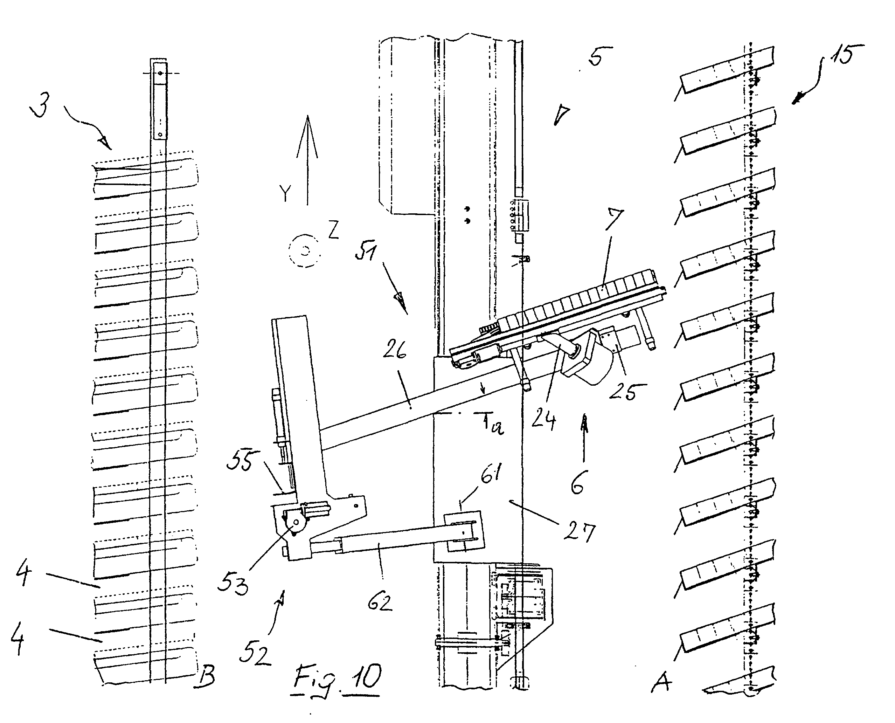

Die Artikelhandhabe-Vorrichtung 51 kann nicht nur eine Artikelstapel-Halterung 52 für ein Befüllen des Kommissionierautomaten 2 und gegebenenfalls für eine Entnahme und einen Transport eines Artikelstapels aus und zu Lagern, sondern zusätzlich eine raumbewegliche Artikelhandhabe-Einheit 6 für eine stapelweise Entnahme und einen stapelweisen Transport von Artikeln von einem Wareneingang E oder von und zu einem Vorratsregal aufweisen, wobei die Artikelhandhabe-Einheit 6 gemäß Figur 10 und die Artikelstapel-Halterung 52 vorzugsweise in einer Vertikalstellung zueinander ausrichtbar bzw. positionierbar sind und ein auf der Artikelhandhabe-Einheit 6 aufgenommener Artikelstapel 7 in die Artikelstapel-Halterung 52 durch einen verstellbaren Artikelstapel-Querschieber 10 umlagbar ist.

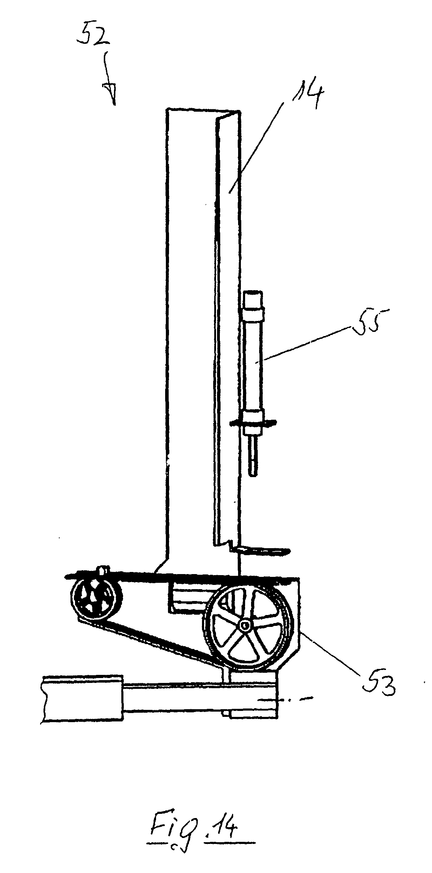

Auch kann die Artikelhandhabe-Einheit 6 nach Figur 10 in die Artikelstapel-Halterung 52 einfahren, wobei dort die Federandruckplatte gelöst wird und der Artikelstapel vertikal verschieblich gestaltet wird, jedoch die Artikelhandhabe-Einheit 6 in der Position der Artikelstapel-Halterung 52 wie in Figur 13 dargestellt verbleibt.

Wie insbesondere in Figur 3 dargestellt, kann die Artikelhandhabe-Einheit 6 des raumbeweglichen Regalbediengeräts 5 eine "bodenseitige" Artikelstapel-Aufnahme 8, einen verstellbaren Artikelstapel-Längsschieber 9, einen verstellbaren Artikelstapel-Querschieber 10 und eine insbesondere eine Reihe von Federfingern 11 aufweisende verstellbare Artikelstapel-Längsklemmplatte 12 besitzen, welche parallel zur und gegenüber der Artikelstapel-Aufnahme 8 liegt und im eingeklemmten Zustand einen direkt aufgenommenen Artikelstapel 7 durch die Artikelstapel-Längsklemmplatte, insbesondere durch deren Federfinger 11, in Stapelquerrichtung Q gegen die Artikelstapel-Aufnahme drückt.

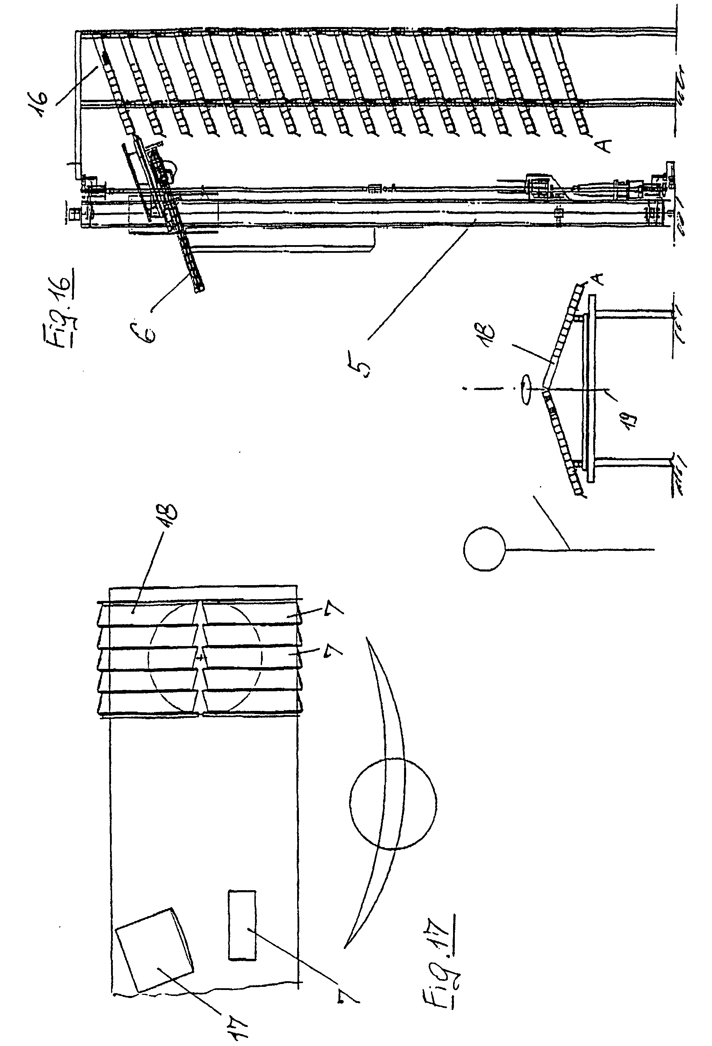

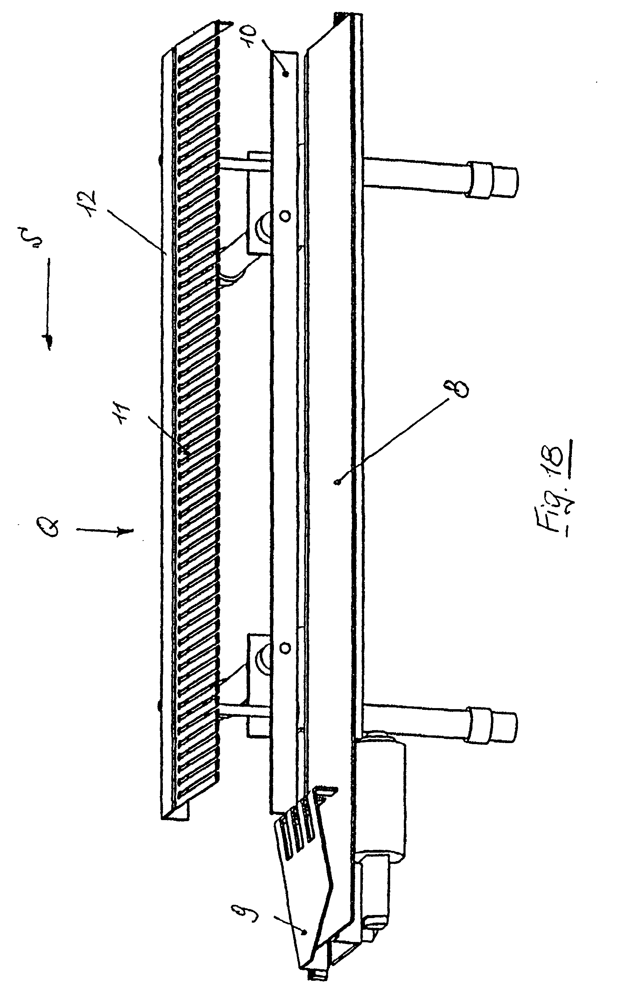

Jedes Vorratsregal, sowohl Übervorratsregal 15 als auch der Zwischenpuffer 16, besitzt den gleichen Grundaufbau in Form eines Stativs 40 mit vier Stehern und mehreren Regalebenen in Form von neben einander angeordneten doppelt geneigten Winkelblechen 14, wie dies insbesondere den Fig. 15 und 16 zu entnehmen ist.

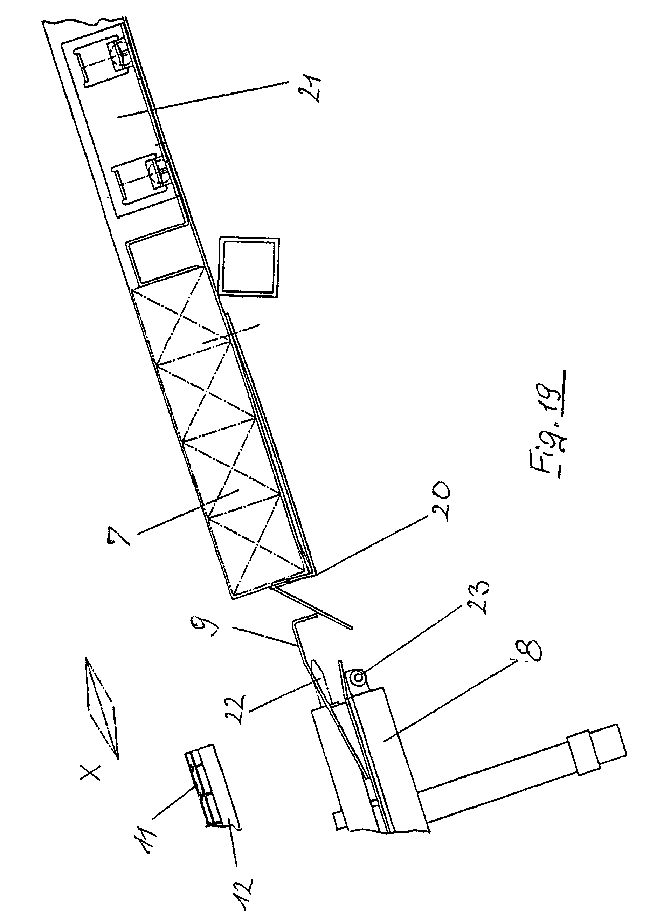

Entsprechend ist auch die Artikelstapel-Ablage 18 beim Wareneingang E konzipiert, wobei diese nur in einer einzigen Regalebene liegt und zwei Ablagen 18 Rücken an Rücken angeordnet sein können, wie dies insbesondere den Fig. 16 und 17 zu entnehmen ist.

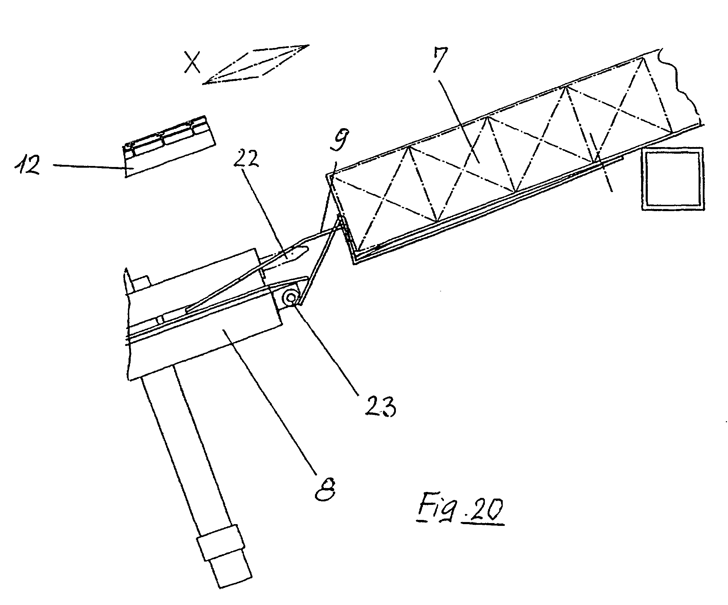

Das doppelt geneigte Winkelblech 14 bildet eine im Querschnitt rechtwinklige und in Längsrichtung schräge Rinne, wobei die Winkelwurzel in jedem Längsquerschnitt der Rinne an tiefster Stelle liegt und beide Winkelschenkelflächen Anschlagflächen für einen aufgenommenen Artikelstapel 7 sind, und ferner am tiefsten Rinnenende ein lösbarer, vorzugsweise niederdrückbarer Artikelanschlag 20 vorgesehen ist, wie dies insbesondere in Fig. 20 gezeigt ist.

Die Neigung a der Rinne in Längsrichtung beträgt 19°. Die Neigung b der Rinnenbasisfläche in Querrichtung 15°.

Ein in der Rinne aufgenommener Artikelstapel 7 kann eine Längsfixierungshilfe aufweisen, insbesondere einen Rollwagen 21 nach Fig. 19, welcher den Artikelstapel gegen den Artikelanschlag 20 drückt.

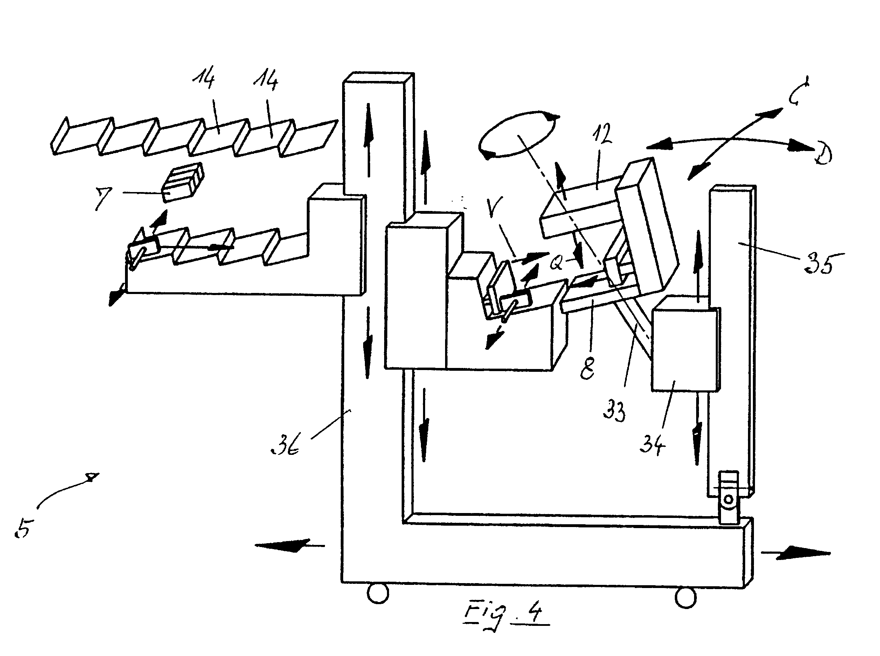

Wie ein doppelt geneigtes Winkelblech 14 gemäß den Fig. 6, 7, so ist auch die bodenseitige Artikelstapel-Aufnahme 8 der Artikelhandhabe-Einheit des Regalbediengeräts geneigt, und zwar in der Grundstellung gemäß Fig. 4 bei einem Transport eines Artikelstapels von Regal zu Regal und bei einer Verschiebung eines Artikelstapels in Stapelrichtung von Regal zu Regal, nicht gemäß Fig. 5 bei einem Positionieren und Einlagern in einen Kommissionierautomaten oder bei einem Umlagern auf die Artikelstapel-Halterung 52. In letztgenannter Stellung ist der Artikelstapel geklemmt gehalten, und zwar durch die Längklemmplatte 12, deren Federfinger 11 den in der Aufnahme 8 aufgenommenen Artikelstapel gegen die Artikelstapel-Aufnahme 8 drückt.

Jedes Regalbediengerät 5 ist also über das Führungs- bzw. Schienensystem 13 von und zu zumindest einem Vorratsregal verfahrbar und bei einem ausgewählten seitlichen Ende A eines Schachts des Vorratsregals, nämlich bei einem Winkelblech 14 stirnseitig positionierbar ist.

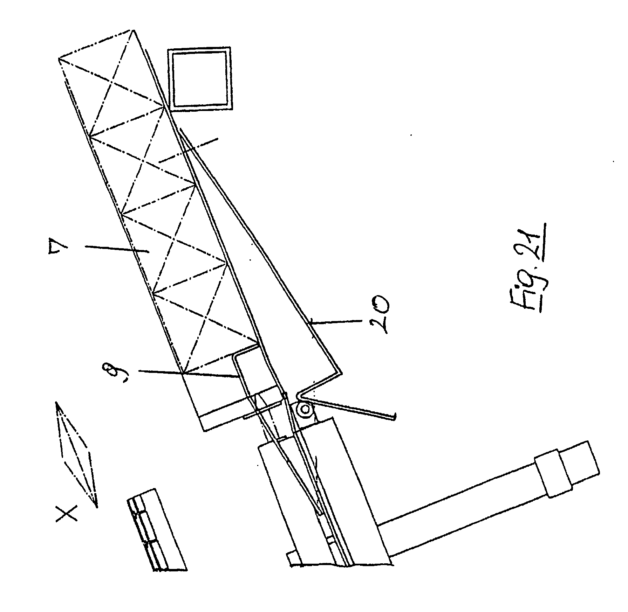

Mit besonderem Bezug auf die Fig. 19, 20, 21 und 22 kann bei jedem ausgewählten Winkelblech ein einziger zu handhabender Artikelstapel 7 durch Verschieben in Stapelrichtung S auf eine ausgerichtete Artikelaufnahme 8 der Artikelhandhabe-Einheit gelangen, und umgekehrt.

Anstelle eines einzigen Artikelstapels können, insbesondere bei kleinen Artikeln, zwei parallel liegende Artikelsäulen oder -stapel in einem Regalschacht zu liegen kommen.

Das Regalbediengerät nach Fig. 9 bis 13 besitzt eine Artikelhandhabe-Vorrichtung 51 mit einer Artikelhandhabe-Einheit 6, welche über eine Schwenkachse 24 auf einem Schlitten 25 befestigt ist, wobei die Querschiene 26 fest oder teleskopierbar auf einem vertikal verschieblichen Hubschlitten 27 des Regalbediengeräts 5 befestigt ist

Die Artikelhandhabe-Vorrichtung 51 weist ferner eine Artikelstapel-Halterung 52 auf, welche einen Befüllungsschacht in Form eines Winkelblechs 14, eines höhenverstellbaren Niederhaltebügels bzw. einer Führung 55 und eines Einzelartikel-Ausschiebers 53 mit Nocken 60 bzw. Noppen oder Stollen besitzt, welche als Artikelanschläge bei einer Betätigung des Ausschiebers 53 fungieren.

Der Ausschiebermechanismus kann eine umlaufenden Kette mit Nocken, ein Zahnriemen mit Nocken oder auch ein pneumatischer Ausschieber sein.

Auch kann der Ausschieber ein Zählwerk besitzen, um die eingefüllten Packungen ins Durchlauf regal (welches auch ein Durchrollregal mit einer Rollenbahn sein kann) zu zählen und somit eine Bestandsführung im Lager durchzuführen.

Für eine Großmengenkommissionierung ist es ebenfalls möglich, den aus einem Übervorrat entnommenen Artikelstapel mittels Ausschieber dirket in einen Versandbehälter zu übergeben.

Der Befüllungsschacht bzw. die Artikelstapel-Halterung 52 kann um eine Schwenkachse 61 gedreht und entlang einer Teleskopachse 62 linear verschoben werden. In der Ausgangssituation befindet sich die Halterung 52 in einer Position, in der sie nicht mit der Artikelhandhabe-Einheit 6 kollidieren kann, zum Beispiel in Fahrtrichtung des Regalbediengeräts.

Im Betrieb fährt das Regalbediengerät beispielsweise zu dem Schacht im Übervorratsregal mit dem zu entnehmenden Artikelstapel. Danach beginnt die Zustellbewegung der Artikelhandhabe-Einheit 6 über die Zustellachse bzw. Querschiene 26, welche in Richtung der gedachten Verlängerung des Übervorratsregals 15 verfährt.

Gemäß Fig. 19, 20 und 21 ist diese Bewegung in mehrere Funktionen geteilt:

Zuerst wird der Anschlag 20 des Übervorratsregals durch die Linearbewegung über Röllchen 23 an der Beschickungseinheit nach unten gedrückt. Gleichzeitig wird der zu entnehmende Artikelsstapel 7 im Übervorratsregal vom Schieber 9 der Beschickungseinheit gestützt. Während dieser Bewegung erfolgt auch ein exaktes Positionieren der Beschickungseinheit am Übervorratsregal über eine entsprechende optische oder induktive Sensorik oder eine Kegelbohrung-Zentrierung 22, um eine möglichst homogene Gleitfläche zwischen Übervorratsregalblech und Beschickungseinheit-Rutschblech zu erzielen.

Der Kegel 22 fährt auch entweder teleskopartig oder über eine eigene Achse mit einer höheren Geschwindigkeit als der Querschieber aus, so daß sich keine Bauteilkollision beim Beschicken des Kanals des Kommissionierautomaten ergibt.

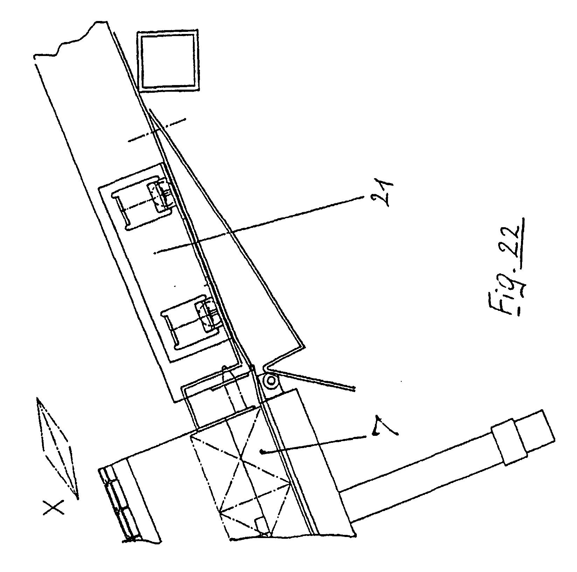

Gemäß Fig. 22 erfolgt nach Abschluß des Andockvorgangs das Entnehmen des Artikelstapels 7. Durch Verfahren des Schiebers 9 rutscht der Artikelstapel auf das Rutschblech der Beschickungseinheit. Kontinuierlich fährt dabei der Stützwagen 21 am Ende des Artikelstapels 7 im Übervorratsreagal nach, um die Integrität des Artikelstapels zu gewährleisten.

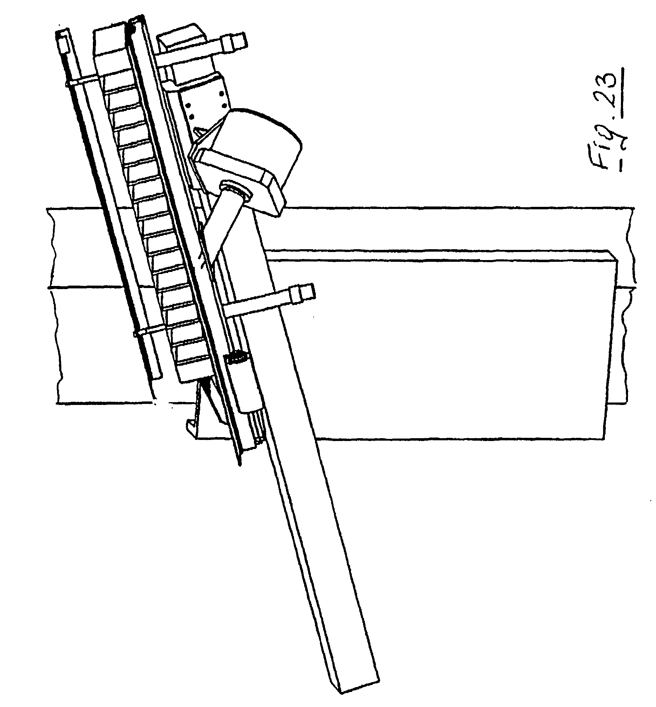

Gemäß Fig. 23 gilt dieser Vorgang als abgeschlossen, wenn der letzte Artikel der Säule bzw. des Stapels auf die Beschickungseinheit geschoben wurde. Der Stützwagen 21 bringt bis zu dieser Position ständig seine Kraft auf den Stapel ein, um ein Kippen oder Zurückbleiben der letzten Artikel zu verhindern.

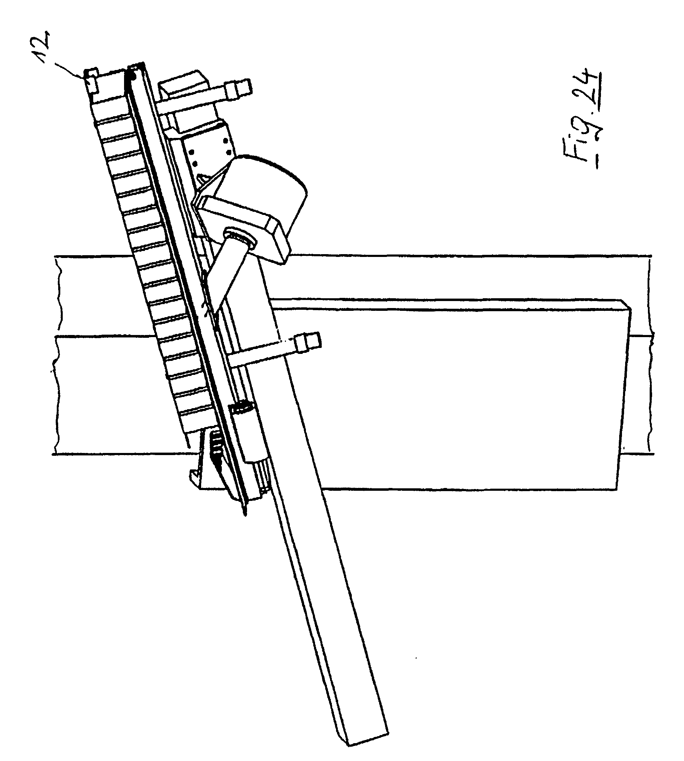

Gemäß Fig. 24 wird, nachdem sich der Artikelstapel vollständig auf der Beschickungseinheit befindet, der Artikelstapel mittels der Klemmvorrichtung in Form der Längsklemmplatte 12 in seiner Lage fixiert.

Beim Verfahren der Beschickungseinheit kommt es, entgegen der

Andocksituation, zum Heraufbewegen des Anschlags 20 durch eine Gleitbewegung an dem zuvor beschriebenen Röllchen. In diesem Bereich fährt der Stützwagen weiter mit der Artikelsäule bzw. dem Artikelstapel mit und wird nach einem Verfahrweg von ca. 20-30mm vom bereits heraufgeklappten Anschlag im Übervorratsregal sicher gehalten. Beim Entnehmen einer Produktsäule stützt sich der am Stützwagen montierte Rechen entsprechend am letzten Produkt ab und wird gesichert vom auffahrenden Anschlag gehalten (Durchtauchen des Rechens durch das Anschlagblech).

Danach wird die Beschickungseinheit mittels der Zustellachse oder Querschiene 26 und Schlitten 25 in die Mittelposition verschoben. Hier erfolgt das Schwenken mit der Schwenkachse 24 in eine Lage, in der der Artikelstapel 7 parallel zur Halterung 52 steht. Danach wird mittels Zustellachse bzw. Querschiene/Schlitten 25 die Artikelhandhabe-Einheit mit dem Artikelstapel 7 wie beschrieben so an die Artikelstapel-Halterung 52 herangeschoben, daß die Vorderkante des Artikelstapels an der Innenkante der Artikelstapel-Halterung 52 anliegt. Mit einer optionalen zusätzlichen Achse kann der Artikelstapel 7 am Ausschieber 53 aufgesetzt werden.

Gegebenenfalls kann auf die zusätzliche verschiebbare Achse verzichtet werden, um den Artikelstapel am Aufschieber aufsitzen zu lassen, weil, wie in Figur 10 ersichtlich, das obere Ende des Artikelstapels 7 immer exakt am selben Punkt der Artikelhandhabe-Einheit 6 positioniert ist. Dadurch kann bei bekannter Position der Halterung 52 immer am selben Punkt abgesetzt werden.

Als nächstes fährt das Regalbediengerät 5 zum zu befüllenden Artikelkanal 4 des Kommissionierautomaten. Hier erfolgt wieder eine genaue Positionierung in X- und Y-Richtung. Danach wird die Artikelstapel-Halterung 52 mittels Teleskopachse 62 zum Artikelkanal 4 zugestellt. Nach exakter Positionierung werden die Artikel mit dem Ausschieber Stück für Stück in den Artikelkanal 4 eingeschoben.

Da das Regalbediengerät 5 normalerweise im Gang zwischen Übervorratsregal 15 und Befüllungsseite B des Durchlaufregals 3 fährt, ist es möglich, gleichzeitig an der anderen Seite des Durchlaufregals sowohl händisch als auch automatisch zu kommissionieren.

Mit Bezug auf Fig. 2, welche ein gegenüber Fig. 1 anders angeordnetes Übervorratsregal 15 aufweist, kann beim Wareneingang E ein Überkarton von einer Palette 41 von einer Person auf einem Arbeitstisch ausgepackt werden, und es können Artikelstapel, beispielsweise von einer Länge von ca. 600mm, zusammengestellt sowie auf einer Ablage 16, 18 angeordnet werden.

Dieser "Wareneingangspuffer" 16, 18 stellt sich folgendermaßen dar:

In zwei Ebenen sind jeweils ca. fünf Speicherschächte vorhanden, wobei, um ergonomisch arbeiten zu können, jeweils ein freier Speicherschacht in die Position P geschoben wird. Nach dem Abschieben wird ein Fußtaster betätigt, damit automatisch der nächste freie Schacht des Wareneingangspuffers in die richtige Position gefahren wird. Auch können alternativ die Schächte auf einem Förderband transportiert werden, wobei auch hier jeweils ein freier Schacht in die Position P gefahren wird. Die Artikel werden sortenrein in die Schächte des Wareneingangspuffers manuell oder automatisch befördert.

Zu diesen Wareneingangsplätzen korrespondiert ein Übervorratsregal 15, daß so auslegt ist, daß in etwa ein Tagesbedarf an Artikeleingängen zwischengepuffert wird, wobei die Länge so groß ist, daß eine bestimmte Anzahl von umlaufenden Regalbediengeräten oft genug an den Wareneingangsplätzen vorbeikommen, um die entsprechend gefüllten Kanäle wieder zu entleeren und umzulagern. Die Auslagerung vom Wareneingangspuffer auf das Regalbediengerät 5 erfolgt in gleicher Weise wie aus dem Übervorratsregal.

Es sind jedoch noch andere Ausführungsmöglichkeiten einer Ablage 18 am Wareneingang E denkbar.

Insbesondere kann gemäß Fig. 15 und 16 vorgesehen sein, die aus einem Überkarton 17 ausgepackten Artikelstapel 7 auf einer Doppel-Ablage 18 abzulegen, wobei die Artikelstapel-Ablage 18 um eine Vertikalachse 19 um 180° drehbar ist, um die abzutransportierenden Artikelstapel 7 in Richtung Regalbediengerät 5 auszurichten und um gleichermaßen die Doppel-Ablage 18 auf der anderen Seite befüllen zu können.

Das Regalbediengerät 5 gemäß Fig. 16 kann (nach einer 180°-Drehung der Artikelhandhabe-Einheit 6 um eine Vertikalachse gedreht und in Vertikalrichtung nach unten verstellt werden, um den Artikelstapel 7 durch Verschiebung zu übernehmen. Längsneigung a und Querneigung b der Ablage und der Aufnahme 8 sind gleich. Beide Vorrichtungen sind exakt zueinander in Längsrichtung ausgerichtet, so daß ein Verschieben des Artikelstapels unter Ausnützung des Gefälles mit Unterstützung des Rollwagens stattfinden kann. Der Längsschieber 9 dient hierbei zum einen dazu, den Artikelanschlag bei A der Ablage zu lösen, und ferner dazu, den Artikelstapel beim Zurückfahren "zu bremsen", bis der Artikelstapel vollständig auf der Aufnahme 8 der Artikelhandhabe-Einheit des Regalbediengeräts aufgenommen ist. Dann dient der Schieber als Artikelanschlag.

Der Artikelanschlag A kann auch durch das Zustellen der Beschickungseinheit gelöst werden. Der Längsschieber selbst besitzt dann einen Rechen, der durch den Artikelanschlag durchtauchen kann. Dieser Rechen bewegt beim Andocken die Produktsäule ca. 20mm nach hinten, um daraufhin die Artikelsäule unter Ausnutzung der Schwerkraft kontrolliert durch den Querschieber aufzunehmen.

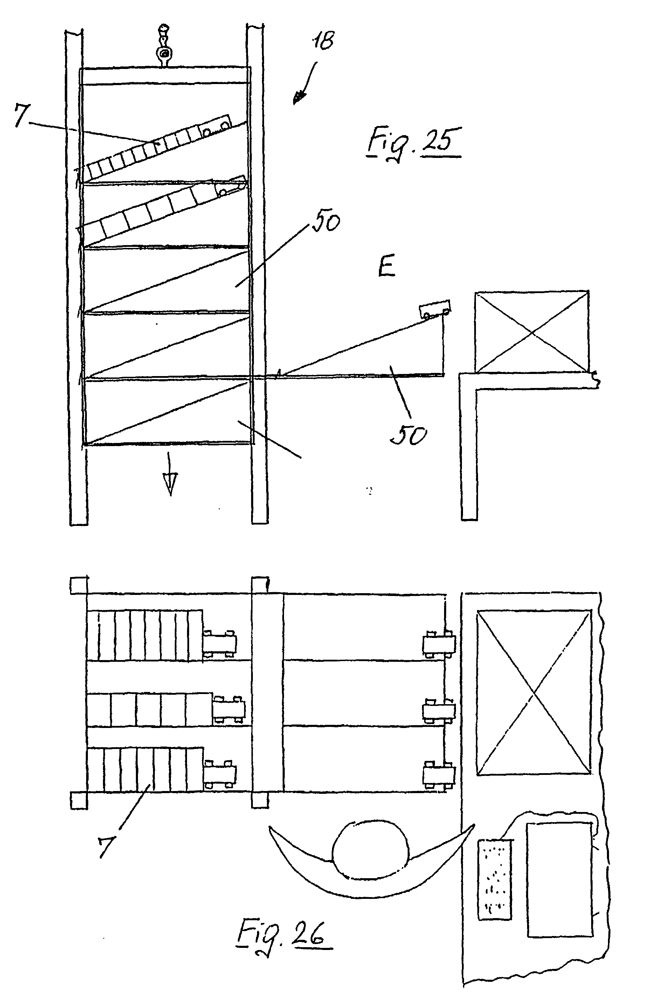

Eine weitere Auspackstation gemäß Fig. 25 und 26 stellt sich folgendermaßen dar:

Die Artikelstapel-Ablage 18 umfaßt ein vertikal verschiebbares Regal mit horizontal beweglichen Schubladen 50, welche manuell in den Bereich E einer Bedienungsperson herausgezogen werden können. Das vertikal verschiebbare Regal fährt hierbei mit einer freien Ebene auf Arbeitsplatzniveau. Manuell wird die leere Schublade 50 gemäß Zeichnung nach rechts gezogen, worauf man z.B. drei Kanäle in Form von doppelt geneigten Winkelblechen mit jeweils einem Artikelstapel 7 befüllen und oberseitig gemäß Zeichnung rechts jeden Artikelstapel mit einem Rollwagen stabilisieren kann. Danach wird die befüllte Schublade in das Regal zurückgestellt. Per Hand- oder Fußtaster wird dann das Regal in der Höhe (oder seitlich) verstellt, dergestalt, daß die nächste freie Schublade auf Arbeitsniveau gelangt. Das Aus- und Einfahren der Schubladen sowie die Regalverstellung in Höhen- und/oder in Seitenrichtung kann insgesamt auch automatisch erfolgen.

Für Vollautomatisierung des Wareneingangs kann auch vorgesehen sein, daß die aus einem Überkarton als Schüttgut ausgeschütteten Artikel maschinell ausgerichtet, von einer Lesestation gelesen, für eine Chargenkontrolle kontrolliert, dann durch eine geeignete Maschine zu Säulen geordnet und in den Zwischenpuffer gefördert werden.

Die in den Fig. 3 bis 8 veranschaulichte Erfindungsvariante eines Regalbediengeräts ist hinsichtlich der Artikelhandhabe-Vorrichtung zweigeteilt, nämlich in eine separate höhenverstellbare Artikelstapel-Aufnahmeeinheit 28 mit mehreren Winkelblechen 14 nach Art, Lage und Größe der Artikelstapel-Aufnahme 8 bzw. des Vorratsregals, welche zumindest einen eigenen verstellbaren zweiten Artikelstapel-Längsschieber 29 besitzt, wobei durch die Artikelstapel-Aufnahmeeinheit 28 mehrere Artikelstapel 7 vom Zwischenpuffer 16 oder von der Artikelstapel-Aufnahme zum Übervorratsregal 15 förderbar sowie ein- und auslagerbar sind, und in eine separate höhenverstellbare Artikelregal-Beschickungseinheit, welche ihrerseits zweigeteilt ist und zum einen eine höhenverstellbare Einzel-Artikelstapel-Aufnahme 8' mit dem Artikelstapel-Längsschieber 9 und einem weiteren Artikelstapel-Querschieber 31 und zum anderen eine raumbewegliche Greifereinheit 32 mit der bodenseitigen Artikelstapel-Aufnahme 8', der Artikelstapel-Längsklemmplatte 12' und dem verstellbaren Artikelstapel-Querschieber 10 besitzt, wobei durch die Artikelregal-Beschickungseinheit ein einziger ausgewählter Artikelstapel 7' (bei kurzen Artikeln gegebenenfalls zwei oder mehrere parallele Artikelstapel) vom Vorratsregal (Übervorratsregal 15, Zwischenpuffer 16) oder von der Artikelstapel-Ablage 18 des Wareneingangs E zum Kommissionierautomaten 2 förderbar und dort in einen ausgewählten schräg horizontalen Kanal des Artikelregals stückweise einlagerbar ist.

Für ein Einlagern des Artikelstapels in den Kommissionierautomaten 2 ist der Artikelstapel 7 durch die Einzel-Artikelstapel-Aufnahme 8' vom Vorratsregal in Stapellängsrichtung durch Verschieben mit dem Artikelstapel-Längsschieber 9 entnehmbar und zum Kommissionierautomaten 2 förderbar und nach einem Umsetzen bzw. Querverschieben V des Artikelstapels 7 vom der Einzel-Artikelstapel-Aufnahme 8' durch den weiteren Artikelstapel-Querschieber 31 auf die bodenseitige Artikelstapel-Aufnahme 8' der ausgerichteten Greifereinheit bzw. Artikelstapel-Halterung 52 und nach einem Festklemmen des gesamten Artikelstapels in Stapelquerrichtung Q durch die Federfinger-Längsklemmplatte 12 beim ausgewählten Kanal des Kommissionierautomaten 2 durch Bewegen der Greifereinheit positionierbar und Artikel für Artikel einlagerbar.

Die Greifereinheit ist über eine Drehachse 33 an einen höhenverstellbaren Hubschlitten 34 befestigt, welcher seinerseits an einer bodenseitig um zwei zueinander senkrechte Achsen C, D angelenkte Vertikalstange 35 des Regalbediengeräts 5 höhenverschieblich ist.

Die Vertikalstange 35 weist eine kürzere Länge auf als die Vertikalstange 36, an welcher die Einzel-Artikelstapel-Aufnahme 8' und die Artikelstapel-Aufnahmeeinheit 28 höhenverschieblich sind.

Gemäß den Figuren 3 bis 8 kann also das kombinierte Wareneinlagerungs-Beschickungsgerät aus dem Wareneingang mit Hilfe der Wareneingangseinheit Artikelsäulen 7 aus schräggestellten, zum Gerät hin geneigten Regalen entnehmen. Der Stapel wird durch den positionierten Schieber geführt. Dieser Schieber bringt am Einlagerungsort die Ware auch in das Regal ein. Der Schieber ist verfahrbar über mehrere Artikelstapel bzw. Produktstangen auf der Wareneinlagerungseinheit. Die Wareneinlagerungseinheit und die Beschickungseinheit sind auf der Achse 36 senkrecht verfahrbar bis zu einer Höhe von ca. 5,5m. Das Gerät selbst ist schienengebunden, kurvengängig und direkt an den Regalzeilen geführt und kann insbesondere über gesteuerte Weichen in Kurzschlüssen bzw. kurzen Kreisen gefahren werden, dergestalt, daß der gesamte Lagerbereich abgedeckt werden kann. Durch Erhöhung der Anzahl der Regalbediengeräte kann die gesamte Anlage erweitert werden.

Die Beschickungseinheit besteht im wesentlichen aus zwei Komponenten: Der Entnahme aus dem Regal mittels Schieber und der Beschickung mit einer schwenkbaren Achse 35. Die zu beschickende Höhe bei Kommissionierautomaten liegt bei ca. 2m bis 2,5m, d.h. die Beschickungseinrichtung muß nicht unbedingt bis zum höchsten Regalboden zur Übernahme der Ware fahren. Dies wird durch die Entnahmeeinheit und Abschieben der entnommenen Ware in den Greifer bzw. die Halterung 52 durchgeführt.

Die Auslagerungseinheit positioniert am entsprechenden Regalschacht, löst eine Bremse und übernimmt durch Zurückfahren des Schiebers 9 den Stapel 7 auf die schräge Ebene. Dann fährt diese Einheit in den Bereich der Beschickungseinheit, die vor den Artikelstapel positioniert wird. Dieser Artikelstapel wird mit dem Schieber 31 in den Greifer geschoben, der hintere Anschlag wird durch die verschiebbare Platte bzw. den Querschieber 10 hergestellt. Durch diesen Anschlag wird erreicht, daß die Artikelvorderkante bei der Beschickung immer an gleicher Stelle ist.

Wenn auch doppelt geneigte Winkelbleche als Unterlage bzw. Ablage von Stapeln besonders vorteilhaft sind, versteht es sich, daß auch eine Einfach-Neigung von Winkelblechen oder eine Horizontalanordnung möglich ist, wenn entsprechende Antriebe und Fixierungshilfen für den Artikelstapel vorgesehen sind.

## Patentansprüche

1. Kommissionieranlage (1) mit zumindest einem Kommissionierautomaten (2), der zumindest ein Artikelregal (3) mit nebeneinander und übereinander angeordneten, gegen die Horizontale geneigten Artikelkanälen (4) aufweist, in denen zu kommissionierende Artikel gelagert werden können, wobei jeder Artikelkanal (4) an seinem einen tiefer gelegenen Längsende eine Einrichtung zum Anhalten und Ausgeben der Artikel und an seinem anderen höher gelegenen Längsende auf der Regalbefüllungsseite (B) mit neuen Artikeln durch ein bewegliches Regalbediengerät (5) befüllbar ist, welches eine bewegliche Artikelhandhabe-Vorrichtung (51) besitzt, die bei jedem Artikelkanal (4) positioniert werden kann,
**dadurch gekennzeichnet,**
**daß** die raumbewegliche Artikelhandhabe-Vorrichtung (51) für einen festen magazinlosen Halt eines Artikelstapels (7) eine Artikelstapel- Halterung (52) besitzt, welche in einer im wesentlichen senkrechten Stellung mit einem in der Halterung aufgenommenen entsprechend senkrechten Artikelstapel bei jedem höher gelegenen Längsende eines Artikelkanals (4) auf der Regalbefüllungsseite (B) positionierbar ist, und die Artikelstapel-Halterung (52) einen in Stapelquerrichtung verschiebbaren unteren vorzugsweise mit einem Zählwerk ausgestatteten Einzelartikel-Ausschieber (53) aufweist, durch welchen vereinzelt der unterste Artikel des Artikelstapels (7) der positionierten Halterung in den ausgewählten Artikelkanal (4) einschiebbar ist, oder alternativ einen hochschiebbaren Artikelstapel-Hochhalter (54) aufweist, durch welchen vereinzelt ein oberster Artikel eines hochgeschobenen entweder schräggestellten Artikelstapels durch Schwerkraft oder durch einen in Stapelquerrichtung verschiebbaren oberen vorzugsweise mit einem Zählwerk ausgestatteten Einzelartikel-Ausschieber (53) in den ausgewählten Artikelkanal (4) gelangt.

2. Kommissionieranlage nach Anspruch 1,
**dadurch gekennzeichnet,**
**daß** die Artikelstapel-Halterung (52) mit unterem Einzelartikel-Ausschieber (53) eine höhenverstellbare Führung (55) für einen unteren auszuschiebenden Einzelartikel aufweist.

3. Kommissionieranlage nach Anspruch 1 oder 2,
**dadurch gekennzeichnet,**
**daß** die Artikelstapel-Halterung (52) ein Artikelstapel-Klemmplatten-Paar mit einer Artikelstapel-Aufnahme (8) und einer querverstellbaren Artikelstapel-Längsklemmplatte (12) aufweist, durch welche ein aufgenommener Artikelstapel (7) in Stapelquerrichtung (Q) federnd eingespannt werden kann, oder daß die in jeder Betriebslage im wesentlichen senkrecht gehaltene Artikelstapel-Halterung (52) ein doppelt geneigtes Winkelblech (14) aufweist, wobei ein in der Halterung aufgenommener Artikelstapel (7) durch Schwerkraft in der Winkelwurzel seitlich fixiert wird und bodenseitig sich der Artikelstapel entweder auf dem Einzelartikel-Ausschieber (53) oder auf dem hochschiebbaren Artikelstapel-Hochhalter (54) abstützt.

4. Kommissionieranlage nach Anspruch 3,
**dadurch gekennzeichnet,**
**daß** die Artikelhandhabe-Vorrichtung (51) nicht nur eine Artikelstapel-Halterung (52) für ein Befüllen des Kommissionierautomaten (2) und gegebenenfalls für eine Entnahme und einen Transport eines Artikelstapels aus und zu Lagern, sondern zusätzlich eine raumbewegliche Artikelhandhabe-Einheit (6) für eine stapelweise Entnahme und einen stapelweisen Transport von Artikeln von einem Wareneingang (E) oder von und zu einem Vorratsregal aufweist, wobei die Artikelhandhabe-Einheit (6) und die Artikelstapel-Halterung (52) vorzugsweise in einer Vertikalstellung zueinander ausrichtbar bzw. positionierbar sind und ein auf der Artikelhandhabe-Einheit (6) aufgenommener Artikelstapel (7) in die Artikelstapel-Halterung (52) durch einen verstellbaren Artikelstapel-Querschieber (10) umlagerbar ist.

5. Kommissionieranlage nach Anspruch 4,
**dadurch gekennzeichnet,**
**daß** die Artikelhandhabe-Einheit (6) des raumbeweglichen Regalbediengeräts (5) eine bodenseitige Artikelstapel-Aufnahme (8), einen verstellbaren Artikelstapel-Längsschieber (9), einen verstellbaren Artikelstapel-Querschieber (10) und eine insbesondere eine Reihe von Federfingern (11) aufweisende verstellbare Artikelstapel-Längsklemmplatte (12) aufweist, welche parallel zur und gegenüber der Artikelstapel-Aufnahme (8) liegt und im eingeklemmten Zustand einen direkt aufgenommenen Artikelstapel (7) durch die Artikelstapel-Längsklemmplatte, insbesondere durch deren Federfinger (11), in Stapelquerrichtung (Q) gegen die Artikelstapel-Aufnahme drückt.

6. Kommissionieranlage nach einem der Ansprüche 1 bis 5,
**dadurch gekennzeichnet,**
**daß** das Regalbediengerät (5) über ein Führungs- bzw. Schienensystem (13) von und zu zumindest einem Vorratsregal verfahrbar und bei einem ausgewählten seitlichen Ende (A) eines Schachts des Vorratsregals, insbesondere eines Winkelblechs (14), positionierbar ist, wobei in jedem ausgewählten Schacht zumindest ein einziger zu handhabender Artikelstapel (7) angeordnet ist bzw. werden kann und der Artikelstapel durch Verschieben in Stapelrichtung (S) auf eine ausgerichtete Artikelaufnahme (8) der Artikelhandhabe-Einheit gelangt, oder umgekehrt von der Artikelaufnahme in den ausgewählten Schacht gelangt, wobei das Führungs- bzw. Schienensystem (13) auch Weichen aufweisen kann, und insbesondere das Vorratsregal ein Übervorratsregal (15) ist, welches dem Kommissionier automaten (2) zugeordnet ist und sich vorzugsweise in der Nähe des Artikelregals (3) des Kommissionierautomaten befindet, oder insbesondere das Vorratsregal ein Zwischenpuffer (16) ist, welcher dem Wareneingang (E) zugeordnet ist und sich vorzugsweise in der Nähe der Auspackstation befindet, an welcher die Artikelstapel (7) aus einem Überkarton (17) ausgepackt und zusammengestellt werden.

7. Kommissionieranlage nach Anspruch 6,
**dadurch gekennzeichnet,**
**daß** die ausgepackten Artikelstapel (7) auf einer Artikelstapel-Ablage (18) zusammengestellt werden, welche die Form eines Teiles zumindest einer Regalebene des Vorratsregals aufweist, insbesondere Winkelbleche (14) sind, wobei das Regalbediengerät (5) für eine Artikelstapelübernahme durch Verschieben auch zur Artikelstapel-Ablage (18) über das Schienen- bzw. Führungssystem (13) verfahrbar und bei dieser Artikelstapel-Ablage, insbesondere bei einem seitlichen Ende (A) eines Winkelblechs, positionierbar ist, und vorzugsweise für eine Positionierung zum Regalbediengerät auch die Artikelstapel-Ablage (18) verschieblich, insbesondere auf einem Förderband oder auf einer Rutsche verschieblich, und/oder um eine Vertikalachse (19) um vorzugsweise 90° oder 180° drehbar ist.

8. Kommissionieranlage nach Anspruch 6 oder 7,
**dadurch gekennzeichnet,**
**daß** das Vorratsregal in ein oder mehreren übereinander angeordneten Ebenen jeweils nebeneinander angeordnete Winkelbleche (14) besitzt, und insbesondere das Winkelblech (14) doppelt geneigt ist und eine im Querschnitt rechtwinklige und in Längsrichtung schräge Rinne ausbildet, wobei die Winkelwurzel in jedem Längsquerschnitt der Rinne an tiefster Stelle liegt und beide Winkelschenkelflächen Anschlagflächen für einen aufgenommenen Artikelstapel (7) sind, und ferner am tiefsten Rinnenende ein lösbarer, vorzugsweise niederdrückbarer Artikelanschlag (20) vorgesehen ist.

9. Kommissionieranlage nach Anspruch 8,
**dadurch gekennzeichnet,**
**daß** ein in der Rinne aufgenommener Artikelstapel (7) eine Längsfixierungshilfe aufweist, welcher den Artikelstapel gegen den Artikelanschlag (20) drückt, wobei die Längsfixierungshilfe ein Rollwagen (21) ist.

10. Kommissionieranlage nach einem der Ansprüche 1 bis 9,
**dadurch gekennzeichnet,**
**daß** die Artikelhandhabe-Einheit des Regalbediengeräts einen Andockzapfen (22) besitzt, welcher in eine entsprechende Aussparung bei einem ausgewählten Schacht eines Vorratsregals als Zentrierungshilfe in Eingriff bringbar ist.

11. Kommissionieranlage nach einem der Ansprüche 1 bis 10,
**dadurch gekennzeichnet,**
**daß** die Artikelstapel-Aufnahme (8) des Regalbediengeräts (5), die Schacht- bzw. Winkelblechausbildung des Übervorratsregals (15), des Zwischenpuffers (16) und der Artikelstapel-Ablage (18) beim Wareneingang (E) hinsichtlich Länge, Breite und gegebenenfalls Neigung (Längsneigung (a), Querneigung (b)) gleich ausgebildet sind, wobei auch das Übervorratsregal (15) und/oder der Zwischenpuffer (16) unterschiedlich groß sein können, vor allem in der Breite.

12. Kommissionieranlage nach einem der Ansprüche 1 bis 11,
**dadurch gekennzeichnet,**
**daß** die Artikelhandhabe-Einheit (6) über eine Schwenkachse (24) auf einem Schlitten (25) befestigt ist, welcher auf einer Querschiene (26) mit einer Neigung (a) der Schachttiefe bzw. Schachtlängsrichtung des Vorratsregals, insbesondere ca. 20°, querverschieblich ist, wobei die Querschiene (26) fest oder teleskopierbar auf einem vertikal verschieblichen Hubschlitten (27) des Regalbediengeräts (5) befestigt ist.

13. Kommissionieranlage nach einem der Ansprüche 1 bis 12,
**dadurch gekennzeichnet,**
**daß** die Artikelhandhabe-Vorrichtung (51) zweigeteilt ist und eine separate höhenverstellbare Artikelstapel-Aufnahmeeinheit (28) mit mehreren Winkelblechen (14) nach Art, Lage und Größe der Artikelstapel-Aufnahme (8) bzw. des Vorratsregals aufweist, welche zumindest einen eigenen verstellbaren zweiten Artikelstapel-Längsschieber (9') besitzt, wobei durch die Artikelstapel-Aufnahmeeinheit (28) mehrere Artikelstapel (7) vom Zwischenpuffer (16) oder von der Artikelstapel-Aufnahme zum Übervorratsregal (15) förderbar sowie ein- und auslagerbar sind, sowie eine separate höhenverstellbare Artikelregal-Beschickungseinheit aufweist, welche ihrerseits zweigeteilt ist und zum einen eine höhenverstellbaren Einzel-Artikelstapel-Aufnahme (8'), gegebenenfalls mehrere Einzel-ArtikelstapelAufnahmen, mit dem Artikelstapel-Längsschieber (9) und einem weiteren Artikelstapel-Querschieber (31) und zum anderen eine raumbewegliche Greifereinheit bzw. Artikelstapel-Halterung (51) mit der bodenseitigen Artikelstapel-Aufnahme (8), der Artikelstapel-Längsklemmplatte (12) mit Winkelanschlag (32) und dem verstellbaren Artikelstapel-Querschieber (10) sowie den Einzelartikel-Ausschieber (53) besitzt, wobei durch die Artikelregal-Beschickungseinheit ein einziger ausgewählter Artikelstapel (7) vom Vorratsregal ( Übervorratsregal (15), Zwischenpuffer (16) ) oder von der Artikelstapel-Ablage (18) des Wareneingangs (E) zum Kommissionierautomaten (2) förderbar und dort in einen ausgewählten Artikelkanal (4) des Kommissionierautomaten (2) vereinzelt einlagerbar ist.

14. Kommissionieranlage nach Anspruch 13,
**dadurch gekennzeichnet,**
**daß** für ein Einlagern des Artikelstapels in den Kommissionierautomaten (2) der Artikelstapel (7) durch die Einzel-Artikelstapel-Aufnahme (8') vom Vorratsregal in Stapellängsrichtung durch Verschieben mit dem Artikelstapel-Längsschieber (9) entnehmbar und zum Kommissionierautomaten (2) förderbar und nach einem Umsetzen bzw. Querverschieben (V) des Artikelstapels (7) vom der Einzel-Artikelstapel-Aufnahme (8') durch den weiteren ArtikelstapelQuerschieber (31) auf die bodenseitige Artikelstapel-Aufnahme (8') der ausgerichteten Greifereinheit bzw. Artikelstapel-Halterung (52) und nach einem Festklemmen des gesamten Artikelstapels in Stapelquerrichtung (Q) durch die Federfinger-Längsklemmplatte (12) beim ausgewählten Artikelkanal (4) des Kommissionierautomaten (2) durch Bewegen der Greifereinheit positionierbar und vereinzelt einlagerbar ist.

15. Kommissionieranlage nach einem der Ansprüche 1 bis 14,
**dadurch gekennzeichnet,**
**daß** zumindest ein separates Regalbediengerät vorgesehen ist, welches der Artikelstapel-Ablage (18) am Wareneingang (E), dem/den Zwischenpuffer(n) (16) und/oder dem/den Übervorratsregal(en) zugeordnet bzw. dort verfahrbar ist und Artikelstapel (7) dort übernehmen oder übergeben kann, wobei das separate Regalbediengerät ausschließlich eine Artikelstapel-Aufnahme (8'), vorzugsweise eine Mehrfachlastaufnahme für mehrerere Artikelstapel (7), besitzt (d.h. nicht eine Artikelregal-Beschickungseinheit), welche dem Kommissioierautomaten zugeordnet ist, und gegebenenfalls das separate Regalbediengerät auch in einer nicht gattungsgemäßen Kommissionieranlage betrieben werden kann.

16. Verfahren zum Bereitstellen und Einlagern von Artikeln in einer Kommissionieranlage (1), nach einem der Ansprüche 1 bis 15, mit zumindest einem Kommissionierautomaten (2), der zumindest ein Artikelregal (3) mit nebeneinander und übereinander angeordneten, gegen die Horizontale geneigten Artikelkanälen (4) aufweist, in denen zu kommissionierende Artikel gelagert werden können, wobei jeder Artikelkanal (4) an seinem tiefer gelegenen einen Längsende eine Einrichtung zum Anhalten und Ausgeben der Artikel und an seinem höher gelegenen anderen Längsende auf der Regalbefüllungsseite (B) mit neuen Artikeln durch ein bewegliches Regalbediengerät (5) befüllbar ist, welches eine bewegliche Artikelhandhabe-Vorrichtung (51) besitzt, die bei jedem Artikelkanal (7) positioniert werden kann,
**dadurch gekennzeichnet,**
**daß** das verfahrbare Regalbediengerät (5) mit der raumbeweglichen Artikelhandhabe-Vorrichtung (51) nebst Artikel-Stapel-Halterung (52) in einer im wesentlichen senkrechten Stellung der Halterung mit einem in der Halterung aufgenommenen entsprechend senkrechten Artikelstapel bei einem ausgewählten höher gelegenen Längsende eines Artikelkanals (4) auf der Regalbefüllungsseite (B) positioniert wird, und durch einen in Stapelquerrichtung verschiebbaren unteren Einzelartikel-Ausschieber (53) der unterste Artikel des Artikelstapels (7) der positionierten Halterung in den ausgewählten Artikelkanal (4) vereinzelt eingeschoben wird, oder alternativ durch einen hochschiebbaren Artikelstapel-Hochhalter (54) ein oberster Artikel eines hochgeschobenen entweder schräggestellten Artikelstapels durch Schwerkraft oder durch einen in Stapelquerrichtung verschiebbaren oberen EinzelartikelAusschieber (53) in den ausgewählten Artikelkanal (4) vereinzelt eingebracht wird.

17. Verfahren nach Anspruch 16,
**dadurch gekennzeichnet,**
**daß** das Regalbediengerät (5) und insbesondere die Artikelstapel-Halterung (52) für einen stapelweisen Transport von Artikeln vom Wareneingang (E) und/oder von und zu Vorratslagern verwendet wird.

18. Verfahren nach Anspruch 16 oder 17,
**dadurch gekennzeichnet,**
**daß** eine separate Artikelhandhabe-Einheit (6) für einen stapelweisen Transport und ein stapelweises Umlagern von Artikeln vom Wareneingang (E) und/oder von und zu Vorratslagern verwendet und für ein stückweises Befüllen eines Kommissionierautomaten mit Artikeln aus dem Artikelstapel in eine ausgerichtete vorzugsweise im wesentlichen senkrecht gehaltene Artikelstapel-Halterung (52) umgelagert wird.

## Claims

1. A commissioning unit (1) with at least one automatic commissioning device (2), which has article shafts (4), which are arranged next to one another and one on top of another and are sloped against the horizontal, and in which articles to be commissioned can be stored, wherein each article shaft (4) has a means for stopping and dispending articles at one of its longitudinal ends that is its lower end and can be filled with new articles at its other, higher longitudinal end on the bay filling side (B) by a travelling bay-storage and retrieval unit (5) which has an article-handling device (51) that can be positioned at each article shaft (4),
**characterized in that**
said article-handling device (51) that is movable in space comprises a stack-of-articles support (52) to fix a stack of articles (7) without using a magazine, which support can be positioned in an essentially vertical position with a correspondingly vertical stack of articles picked up in the support at each higher longitudinal end of a said article shaft (4) on the said bay filling side (B), wherein the said stack-of-articles support (52) has a said lower individual article ejector (53), which is displaceable in the transverse direction of the stack and is preferably equipped with a counter, and by which individually the lowermost article of the said stack of articles (7) of the positioned support can be pushed into the said selected article shaft (4) or, as an alternative, it has a said stack-of-articles holding-up device (54), which can be pushed up and by which individually a topmost article of a pushed-up, obliquely positioned stack of articles reaches the said selected article shaft (4) under the force of gravity or by means of a said upper individual article ejector (53), which is displaceable in the transverse direction of the stack and is preferably equipped with a counter.

2. Commissioning unit in accordance with claim 1,
**characterized in that**
a said stack-of-articles support (52) with a said lower individual article ejector (53) has a said, vertically adjustable guide (55) for a lower individual article to be pushed out.

3. Commissioning unit in accordance with claim 1 or 2,
**characterized in that**
the said stack-of-articles support (52) has a pair of stack-of-articles clamping plates with a with a said stack-of-articles pick-up (8) and with a said transversely adjustable longitudinal individual article clamping plate (12), by which a said picked-up stack of articles (7) can be elastically clamped in the said transverse direction (Q) of the stack, or wherein the stack-of-articles support (52), which is held in an essentially vertical position in each operating position, has a said, doubly sloped angle sheet iron (14), wherein a said stack of articles (7) picked up in the support is laterally fixed in the root of the angle by the force of gravity and the stack of articles is supported on the bottom side either on the said individual article ejector (53) or on the said stack-of-articles holding-up device (54) that can be pushed up.

4. Commissioning unit in accordance with claim 3,
**characterized in that**
the said article-handling device (51) has not only a said stack-of-articles support (52) for filling the said automatic commissioning device (2) and optionally for removing and transporting a stack of articles from and to storage areas, but additionally also a said article-handling unit (6), which is movable in space, for the removal of articles stack by stack and for the transport of articles stack by stack from a said acceptance department (E) or from and to a supply bay, wherein the said article-handling unit (6) and the said stack-of-articles support (52) can be preferably aligned and positioned in relation to one another in a vertical position and a said stack of articles (7) picked up on the said article-handling unit (6) can be transferred into the said stack-of-articles support (52) by a said adjustable transverse stack-of-articles pusher (10).

5. Commissioning unit in accordance with claim 4,
**characterized in that**
the said article-handling unit (6) of the said bay-storage and retrieval unit (5), which is movable in space, has a said bottom-side stack-of articles pick-up (8), a said adjustable longitudinal stack-of-articles pusher (9), a said adjustable transverse stack-of-articles pusher (10), and a said adjustable longitudinal stack-of-articles clamping plate (12), which has especially a row of said spring-tensioned fingers (11) and is located in parallel to and opposite the said stack-of-articles pick-up (8) and presses in the clamped state a said stack of articles (7) picked up directly against the stack-of-articles pick-up in the said transverse direction (Q) of the stack by the longitudinal stack-of-articles clamping plate, especially by the said spring-tensioned fingers (11) thereof.

6. Commissioning unit in accordance with one of the claims 1 to 5,
**characterized in that**
the said bay-storage and retrieval unit (5) can be displaced via a said guide or rail system (13) from and to at least one supply bay and can be positioned at a said selected lateral end (A) of a shaft of the supply bay, especially of a said angel sheet iron (14), wherein at least one said single stack of articles (7) to be handled is or can be arranged in each selected shaft and the stack of articles reaches a said aligned article pick-up (8) of the article-handling unit by displacement in the said direction (S) of the stack, or conversely, it reaches the selected shaft from the article pick-up, wherein the said guide or rail system (13) may also have switches, and especially the supply bay is a said higher-level supply bay (15), which is associated with the said automatic commissioning device (2) and is preferably located in the vicinity of the said article bay (3) of the automatic commissioning device.

7. Commissioning unit in accordance with claim 6,
**characterized in that**
the unpacked stacks of articles (7) are put together on a said stack-of-articles stacker plate (18), which has the shape of a part of at least one bay level of the supply bay, especially said angle sheet irons (14), wherein the said bay-storage and retrieval unit (5) is displaceable for taking over an article by displacement also to the stack-of articles stacker plate (18) via the said rail or guide system (13) and can be positioned at this stack-of-articles stacker plate, especially at a said lateral end (A) of a sheet iron, and preferably the said stack-of-articles stacker plate (18) is also displaceable, especially displaceable on a conveyor belt or on a chute and/or rotatably around a said vertical axis (19) by preferably 90° or 180° for positioning to the bay-storage and retrieval unit.

8. Commissioning unit in accordance with claim 6 or 7,
**characterized in that**
the supply bay has said angle sheet irons (14) arranged next to one another in one or more planes arranged one on top of another, and preferably the said angle sheet iron (14) is doubly sloped and forms a chute that has a rectangular cross section and is oblique in the longitudinal direction, wherein the root of the angle is located at the lowest point in each cross section over the length of the chute and the two surfaces of the legs of the angle are stop faces for a said picked-up stack of articles (7) and, furthermore, a said detachable, preferably depressible article stop (20) is provided at the lowest end of the chute.

9. Commissioning unit in accordance with claim 8,
**characterized in that**
a stack of articles (7) picked up in the chute has a longitudinal fixing aid, which presses the stack of articles against the said article stop (20), wherein said longitudinal fixing aid is a said rolling cart (21).

10. Commissioning unit in accordance with one of the claims 1 to 9,
**characterized in that**
the article-handling unit of the bay-storage and retrieval unit has a said coupling pin (22), which can be caused to engage a corresponding recess acting as a centering aid at a selected shaft of a supply bay.

11. Commissioning unit in accordance with one of the claims 1 to 10,
**characterized in that**
the said stack-of-articles pick-up (8) of the said bay storage and retrieval unit (5), the shaft and the angle sheet iron of the said higher-lever supply bay (15), the said buffer (16) and the said stack-of articles stacker plate (18) at the said acceptance department (E) have the same designs in terms of length, width and optionally slope (longitudinal slope (a), transverse slope (b)), wherein the said higher-level supply bay (15) and/or the said buffer (16) may also have different sizes, especially in width.

12. Commissioning unit in accordance with one of the claims 1 to 11,
**characterized in that**
the said article-handling unit (6) is fastened via a said pivot axis (24) on a said carriage (25), which is transversely displaceable on a said transverse rail (26) with a said slope (a) in the depth of the shaft or in the longitudinal direction of the shaft of the supply bay, especially approx. 20°, wherein the said transverse rail (26) is rigidly or telescopically fastened on a said, vertically displaceable lifting carriage (27) of the said bay-storage and retrieval unit (5).

13. Commissioning unit in accordance with one of the claims 1 to 12,
**characterized in that**
the said article-handling device (51) is divided into two parts and has a said separate, vertically adjustable stack-of-articles pick-up unit (28) with a plurality of said angle sheet irons (14) of the type, position and size of the said stack-of-articles pick-up (8) and of the supply bay, which has at least one said adjustable second longitudinal stack-of-articles pusher (9') of its own, wherein a plurality of stacks of articles (7) can be conveyed by the said stack-of-articles pick-up unit (28) from the said buffer (16) or from the stack-of-articles pick-up to the said higher-level supply bay (15) and loaded and removed, and a separate, vertically adjustable article bay loading unit, which is in turn divided into two parts and has, on the one hand, a said, vertically adjustable individual stack-of-articles pick-up (8'), optionally a plurality of individual stack-of-articles pick-ups, with the said longitudinal stack-of-articles pusher (9) an d with another said transverse stack-of-articles pusher (31) and, on the other hand, a said gripping unit or stack-of-articles support (51) , which is movable in space, with the said bottom-side stack-of-articles pick-up (8), the said longitudinal stack-of-articles clamping plate (12) with the said angle stop (32) and with the said adjustable transverse stack-of articles pusher (10) as well as with the said individual article ejector (53), wherein a said single selected stack of articles (7) can be conveyed by the said article bay loading unit from the supply bay (said higher-level supply bay (15), said buffer (16)) or from the said stack-of-articles stacker plate (18) of the said acceptance department (E) to the said automatic commissioning device (2) and be loaded there individually into a said selected article shaft (4) of the said automatic commissioning device (2).

14. Commissioning unit in accordance with claim 13,
**characterized in that**
for loading the stack of articles into the said automatic commissioning device (2), the said stack of articles (7) can be removed by the said individual stack-of-articles pick-up (8') from the supply bay in the longitudinal direction of the stack by displacement with the said longitudinal stack-of-articles pusher (9) and can be conveyed to the said automatic commissioning device (2) and it can be positioned and individually loaded after transfer or transverse displacement (V) of the said stack of articles (7) from the said individual stack-of-articles pick-up (8') by the said additional transverse stack-of-articles pusher (31) onto the said bottom-side stack-of-articles pick-up (8') of the said aligned gripping unit or stack-of-articles support (52) and after clamping of the entire stack of articles in the said transverse direction (Q) of the stack by the said longitudinal clamping plate (12) having spring-tensioned fingers at the said selected article shaft (4) of the said automatic commissioning devise (2) by moving the gripping unit.

15. Commissioning unit in accordance with one of the claims 1 to 14,
**characterized in that**
at least one separate bay-storage and retrieval unit is provided, which is associated with the said stack-of-articles stacker plate (18) at the said acceptance department (E), the said buffer(s) (16) and/or the higher-level supply bay(s) or can be displaced thereto and can take over or transfer said stacks of articles (7) there, wherein the separate bay-storage and retrieval unit has exclusively a said stack-of-articles pick-up (8'), preferably a multiple-load pick-up means for a plurality of said stacks of articles (7), (i.e., not an article bay loading unit), which is associated with the automatic commissioning device, and the separate bay-storage and retrieval unit may optionally also be operated in a commissioning device that is not of this class.

16. Method for making ready and loading articles in a said commissioning unit (1), in accordance with one of the claims 1 to 15, with at least one said automatic commissioning device (2), which has at least one said article bay (3) with said article shafts (4), which are arranged next to one another and one on top of another and are sloped against the horizontal and in which articles to be commissioned can be stored, wherein each said article shaft (4) has a means for stopping and dispensing the articles at its lower longitudinal end and can be filled with new articles at its higher longitudinal end on the bay filling side (B) by a travelling bay-storage and retrieval unit (5) which has an article-handling device (51) that can be positioned at each article shaft (4),
**characterized in that**
the said travelling bay storage and retrieval unit (5), with a said article-handling device (51), which is movable in space, with a said stack-of-articles support (52), is positioned in an essentially vertical position of the support with a correspondingly vertical stack of articles picked up in the support at a selected, higher longitudinal end of a said article shaft (4) on the said bay filling side (B), wherein the lowermost article of the said stack of articles (7) of the support can be pushed into the said selected shaft (4) by a said lower individual article ejector (53) displaceable in the transverse direction of the stack or, as an alternative, a topmost article of a pushed-up , obliquely positioned stack of articles is introduced into the said selected article shaft (4) by the force of gravity or by a said upper individual article ejector (53) that is displaceable in the transverse direction of the stack.

17. Method in accordance with claim 16,
**characterized in that**
the said bay-storage and retrieval unit (5) and especially the said stack-of-articles support (52) are used for the transport of articles stack by stack from the said acceptance department (E) and/or from and to supply storage areas.

18. Method in accordance with claim 16 or 17,
**characterized in that**
a said separate article-handling unit (6) is used for the transport of articles stack by stack and for the transfer of articles stack by stack from the said acceptance department (E) and/or from and to supply storage areas and is transferred into an aligned, preferably essentially vertically held stack-of-articles support (52) for filling an automatic commissioning device with articles piece by piece from the stack of articles.

## Revendications

1. Installation de préparation de commandes (1) avec au moins un automate de préparation de commandes (2), présentant au moins une étagère à articles (3) ayant des canaux à articles (4) disposés les uns à côté des autres et les uns au-dessus des autres, inclinés sous un certain angle par rapport à l'horizontale, canaux dans lesquels peuvent être stockés des articles devant être préparés pour une commande, chaque canal à articles (4) présentant, sur son extrémité longitudinale basse, un dispositif pour stopper et distribuer les articles, et étant susceptible d'être chargé, sur son autre extrémité longitudinale, plus haute, du côté remplissage des étagères (B) par de nouveaux articles, au moyen d'un appareil de desserte d'étagères (5) mobile, comportant un dispositif de manipulation d'articles (51) mobile, pouvant être positionné à chaque canal à articles (4),
**caractérisée en ce que**
le dispositif de manipulation d'articles (51) mobile dans l'espace comporte, pour un maintien ferme, sans magasin, d'une pile d'articles (7), un dispositif de maintien de pile d'articles (52), qui peut être positionné en une position pratiquement verticale, avec une pile d'articles verticale correspondante logée dans le dispositif de maintien, en se tenant à chaque extrémité longitudinale, placée plus haut, d'un canal à article (4), sur le côté de remplissage des étagères (B) et le dispositif de maintien de pile d'articles (52) présente un expulseur d'articles individuels (53) inférieur, déplaçable dans la direction transversale de la pile, équipé de préférence d'un compteur d'articles individuels, au moyen duquel l'article, placé à la position la plus basse de la pile d'articles (7) du dispositif de maintien positionné, peut être introduit, de façon individualisée, dans le canal à articles (4) sélectionné ou, en variante, présente un releveur de pile d'articles (54) susceptible d'être levée par poussée, au moyen duquel un article, placé à la position la plus haute d'une pile d'articles relevée, placée en position oblique, arrive, de façon individualisée, dans le canal à articles (4) sélectionné, muni de préférence d'un compteur, ceci soit sous l'effet de la force de la gravité, soit sous l'effet d'un expulseur d'article individuel (53) supérieur, déplaçable dans la direction transversale de la pile.

2. Installation de préparation de commandes selon la revendication 1, **caractérisée en ce que** le dispositif de maintien (53) de pile d'articles, muni d'un expulseur d'article individuel inférieur (53) présente un guidage (55) réglable en hauteur, pour un article individuel inférieur à expulser.

3. Installation de préparation de commandes selon la revendication 1 ou 2, **caractérisée en ce que** le dispositif de maintien de la pile d'articles (52) présente une paire de plaques de serrage de pile d'articles avec un réceptacle de pile d'articles (8) et une plaque de serrage longitudinale (12) de pile d'articles réglable transversalement, au moyen de laquelle une pile d'articles (7) supportée peut être enserrée élastiquement dans la direction transversale à la pile (Q), ou bien **en ce que** le dispositif de maintien de pile d'articles (52) maintenu sensiblement verticalement à chaque position de fonctionnement, présente une tôle en crémaillère (14) inclinée doublement, une pile d'articles (7) supportée dans le dispositif de maintien étant fixée latéralement dans la racine de la crémaillère sous l'effet de la force de la gravité et, côté fond, la pile d'articles prenant appui soit sur l'expulseur d'article individuel (53), soit sur le releveur d'article (54) relevable.

4. Installation de préparation de commandes selon la revendication 3, **caractérisée en ce que** le dispositif de manipulation d'articles (51) présente non seulement un dispositif de maintien de pile d'articles (52) pour un remplissage de l'automate de préparation de commandes (2) et, le cas échéant, pour un prélèvement et un transport d'une pile d'articles et pour le stockage mais, en plus, une unité de manipulation d'articles (6) mobile dans les trois dimensions, pour effectuer un prélèvement par pile et un transport par pile d'articles depuis une entrée de marchandises (E) ou depuis une étagère de stockage, l'unité de manipulation d'articles (6) et le dispositif de maintien de pile d'articles (52) étant susceptibles d'être orientés ou positionnés l'un par rapport à l'autre, de préférence en une position verticale, et une pile d'articles (7), supportée sur l'ensemble de manipulation d'articles (6), est susceptible d'être transstockée dans le dispositif de maintien de pile d'articles (52), par un pousseur transversal de pile d'articles (10) réglable.

5. Installation de préparation de commandes selon la revendication 4, **caractérisée en ce que** l'unité de manipulation d'articles (6) de l'appareil de desserte d'étagères (5), mobile dans les trois dimensions, présente un réceptacle de pile d'articles (8) situé côté fond, un poussoir longitudinal de pile d'articles (9) réglable, un poussoir transversal de pile d'articles (10) réglable et une plaque de serrage longitudinale de pile d'articles (12) réglable, présentant en particulier une série de doigts élastiques (11), plaque s'étendant parallèlement et en regard de la pile d'articles (8) et, à l'état enserré, pressant une pile d'articles (7) supportée directement, au moyen de la plaque de serrage longitudinale de pile d'articles, en particulier au moyen de ses doigts élastiques (11), dans la direction transversale de pile (Q), contre un réceptacle de pile d'articles.

6. Installation de préparation de commandes selon l'une des revendications 1 à 5, **caractérisée en ce que**
l'appareil de desserte d'étagères (5) est susceptible d'être positionné, par l'intermédiaire d'un système de guidage ou de glissière (13), depuis et vers au moins une étagère de stockage et à une extrémité latérale (A) sélectionnée d'un puits de l'étagère de stockage, en particulier d'une tôle de crémaillère (14), sachant que dans chaque puits sélectionné est disposée au moins une pile d'articles (7) à manipuler individuellement et, par un déplacement dans la direction d'empilage (S), la pile d'articles arrive sur un support d'article (8), orienté en alignement, de l'unité de manipulation d'articles ou, à l'inverse, arrive du support d'article dans le puits sélectionné, le système de guidage ou à glissière (13) pouvant également présenter des aiguillages et, en particulier, l'étagère de stockage étant une étagère de stockage d'excédent (15) qui est associée au groupe de préparation de commandes (2) et qui se trouve de préférence à proximité de l'étagère à articles (3) de l'automate de préparation de commandes, ou, en particulier, l'étagère de stockage est un tampon intermédiaire (16) qui est associé à l'entrée de marchandise (E) et se trouve de préférence à proximité du poste de déballage auquel les piles d'articles (7) sont déballées d'un carton d'emballage (17) et regroupées.

7. Installation de préparation de commandes selon la revendication 6, **caractérisée en ce que** les piles d'articles (7) déballées sont regroupées sur un déposoir de pile d'articles (18) qui présente la forme d'une partie au moins d'un plan d'étagères de l'étagère de stockage, en particulier formé par des tôles de crémaillère (14), l'appareil de desserte d'étagères (5) étant déplaçable pour effectuer un transfert de pile d'articles, par un déplacement également vers le déposoir à piles d'articles (18), le déplacement se faisant par l'intermédiaire du système à glissière ou de guidage (13) et positionnable, une fois arrivé à ce déposoir à piles d'articles, en particulier une fois arrivé à une extrémité (A) latérale d'une tôle de crémaillère, et, de préférence, le déposoir à piles d'articles (18) est également déplaçable pour effectuer un positionnement par rapport à l'appareil de desserte d'étagères, en particulier déplaçable sur une bande convoyeuse ou sur une goulotte et/ou est susceptible de tourner, de préférence de 90° ou de 180°, autour d'un axe vertical (19).

8. Installation de préparation de commandes selon la revendication 6 ou 7, **caractérisée en ce que** l'étagère de stockage comporte, dans un ou plusieurs plans disposés les uns au-dessus des autres, chaque fois des tôles de crémaillère (14) disposées les unes à côté des autres et, en particulier la tôle de crémaillère (14) étant d'une inclinaison double et formant une goulotte à section transversale rectangulaire et à direction longitudinale oblique, sachant que la racine de crémaillère, dans chaque section transversale longitudinale de la goulotte, est située au point le plus bas et que les deux faces de branche de crémaillère sont des faces de butée pour une pile d'articles (7) à supporter et, en outre, une butée pour articles (20) désolidariser, de préférence pouvant être abaissée par pression, est prévue à l'extrémité la plus basse de la goulotte.

9. Installation de préparation de commandes selon la revendication 8, **caractérisée en ce qu'**une pile d'articles (7) logée dans la goulotte présente une aide à la fixation longitudinale qui a comme effet de presser la pile d'articles contre la butée d'article (20), l'aide à la fixation longitudinale étant un chariot au roulant (21).

10. Installation de préparation de commandes selon l'une des revendications 1 à 9, **caractérisée en ce que** l'unité de manipulation d'articles de l'appareil de desserte d'étagères comporte un téton d'accostage (22) qui est susceptible d'être mise en prise, à titre d'aide au centrage, dans un évidement correspondant d'un puits sélectionné d'une étagère de stockage.

11. Installation de préparation de commandes selon l'une des revendications 1 à 10, **caractérisée en ce que** le réceptacle de pile d'articles (8) de l'appareil de desserte d'étagères (5), la configuration en puits ou en tôle de crémaillère de l'étagère de stockage d'excédent (15), du tampon intermédiaire (16) et du déposoir à piles d'articles (18), à l'entrée des marchandises (E), sont d'une configuration identique du point de vue de la longueur, la largeur et, le cas échéant, l'inclinaison (inclinaison longitudinale (a), inclinaison transversale (b)), sachant que l'étagère de stockage d'excédent (15) et/ou le tampon intermédiaire (16) peuvent être de taille différente, surtout en largeur.

12. Installation de préparation de commandes selon l'une des revendications 1 à 11, **caractérisée en ce que** l'unité de manipulation d'articles (6) est fixée par l'intermédiaire d'un axe de pivotement (24) sur un chariot (25), qui est déplaçable transversalement sur une glissière transversale (26), la profondeur de puits ou la direction longitudinale de puits de l'étagère de stockage étant orientée avec une inclinaison (a), en particulier d'environ 20°, sachant que la glissière transversale (26) est fixée, rigidement ou de façon télescopique, sur un chariot de levage (27) déplaçable verticalement, appartenant à l'appareil de desserte d'étagères (5).

13. Installation de préparation de commandes selon l'une des revendications 1 à 12, **caractérisée en ce que** le dispositif de manipulation d'articles (51) est divisé en deux et présente une unité de support de pile d'articles (28) réglable en hauteur, séparée, ayant plusieurs tôles de crémaillère (14), selon le type, la position et la taille du réceptacle de pile d'articles (8) ou de l'étagère de stockage, qui comporte au moins un deuxième poussoir longitudinal de pile d'articles (9') manoeuvrable, propre, sachant que, au moyen de l'unité de réceptacle de pile d'articles (23), plusieurs piles d'articles (7) peuvent être transportées ainsi qu'introduites en magasin et sorties de magasin, du tampon intermédiaire (7) ou du réceptacle de pile d'articles, pour être passées à l'étagère de stockage d'excédent (15), ainsi qu'une unité de garnissage d'étagères d'articles, séparée, réglable en hauteur, qui, de son côté, est divisée en deux et comporte, d'une part, un réceptacle de pile d'articles individuels (8') réglable en hauteur, le cas échéant plusieurs réceptacles de pile d'articles individuels, avec le poussoir longitudinal de pile d'articles (9) et un autre poussoir transversal de pile d'articles (31) et comporte, d'autre part, une unité de preneur mobile dans les trois directions, ou un dispositif de maintien de pile d'articles (51), avec un réceptacle de pile d'articles (8) situé côté front, la plaque de serrage longitudinal de pile d'articles (12) avec la butée à crémaillère (32) et le poussoir transversal de pile d'articles (10) déplaçable ainsi que l'expulseur d'article individuel (53), sachant que, au moyen de l'unité de garnissage d'étagères d'articles, une pile d'articles (7) sélectionnée, unique peut être transportée de l'étagère de stockage (étagère de stockage d'excédent (15), tampon intermédiaire (16)) ou du déposoir à piles d'articles (18) de l'entrée de marchandises (E) vers l'automate de préparation de commandes (2) et, de là, être introduite dans le magasin, de façon individualisée, dans un canal à articles (4) sélectionné de l'automate de préparation de commandes (2).

14. Installation de préparation de commandes selon la revendication 13, **caractérisée en ce que**, pour effectuer une entrée en magasin de la pile d'articles dans les automates de préparation de commandes (2), la pile d'articles (7) est susceptible d'être prélevée au moyen du réceptacle de pile d'articles individuels (8') depuis l'étagère de stockage dans la direction longitudinale de pile, par un déplacement effectué avec le poussoir longitudinal de pile d'articles (9), et d'être transportée à l'automate de préparation de commandes (2) et, après un changement de place et/ou un déplacement transversal (V) de la pile d'articles (7), du réceptacle de pile d'articles individuels (8'), au moyen du poussoir transversal de pile d'articles (31) supplémentaire, d'être déplacée au réceptacle de pile d'articles (8'), situé côté fond, de l'unité à preneurs ou du dispositif de maintien de pile d'articles (52) orienté(e) en alignement et, après un blocage par serrage de l'ensemble de la pile d'articles, effectué dans la direction transversale de pile (Q), la pile d'articles (7) est susceptible d'être positionnée au moyen de la plaque de serrage longitudinale à doigt élastique (12), pour un canal à articles (4) sélectionné de l'automate de préparation de commandes (2), par un déplacement de l'unité à preneurs, et d'être introduite de façon individualisée en magasin.

15. Installation de préparation de commandes selon l'une des revendications 1 à 14, **caractérisée en ce qu'**est prévu au moins un appareil de desserte d'étagères séparé, associé au déposoir à piles d'articles (18), à l'entrée des marchandises (E), au un ou plusieurs tampons intermédiaires (16), et/ou aux une ou plusieurs étagère de stockage d'excédent et/ou y est déplaçable et peut assurer à cet endroit la prise en charge ou le transfert de la pile d'articles (7), sachant que l'appareil de desserte d'étagères séparé comporte exclusivement un réceptacle de pile d'articles (8'), de préférence un réceptacle à chargement en plusieurs compartiments, pour recevoir plusieurs piles d'articles (7) (c'est-à-dire non pas une unité de garnissage d'étagère à articles) qui est associé à l'automate de préparation de commandes et, le cas échéant, l'appareil de desserte d'étagères séparé pouvant fonctionner également dans une installation de préparation de commandes qui ne soit pas du type du préambule.

16. Procédé de fourniture et d'entrée en magasin d'articles, dans une installation de préparation de commandes (1) selon l'une des revendications 1 à 15, avec au moins un automate de préparation de commandes (2), qui présente au moins une étagère à articles (3) avec des canaux à articles (4) disposés les uns à côté des autres et les uns au-dessus des autres, canaux inclinés par rapport à l'horizontale, dans lesquels peuvent être stockés des articles servant à la préparation de commandes, sachant que chaque canal à articles (4) présente, à son extrémité longitudinale la plus basse, un dispositif de maintien immobilisé et fournir les articles et peut être chargé, à son autre extrémité, placée plus haut, du côté du remplissage d'étagère (B), par de nouveaux articles, au moyen d'un appareil de desserte d'étagères (5) mobile, qui comporte un dispositif de manipulation d'articles (51) mobile, qui peut être positionné à canal à articles (7), **caractérisé en ce que** l'appareil de desserte d'étagères (5) déplaçable, avec le dispositif de manipulation d'articles (51) mobile dans les trois dimensions, outre le dispositif de maintien de pile d'articles (52), est positionné en une position sensiblement verticale du dispositif de maintien, en comprenant une pile d'articles verticale, correspondante, logée dans le dispositif de maintien, à l'emplacement d'une extrémité sélectionnée, placée à un niveau plus élevé, d'un canal à articles(4), sur le côté de remplissage d'étagères (B), et l'article, placé à la position la plus basse de la pile d'articles (7) du dispositif de maintien positionné, est introduit, de façon individualisée, dans le canal à articles (4) sélectionné, par un expulseur à article individuel (53) inférieur déplaçable dans la direction transversale à celle de la pile, ou, en variante, un article placé à la position la plus haute d'une pile d'articles relevée, placée en position oblique, est introduit, de façon individualisée, dans le canal à articles (4) sélectionné, ceci soit sous l'effet de la force de la gravité, soit sous l'effet d'un expulseur d'article individuel (53) supérieur, déplaçable dans la direction transversale de la pile.

17. Procédé selon la revendication 16, **caractérisé en ce que** l'appareil de desserte d'étagères (5) et, en particulier, le dispositif de maintien de pile d'articles (52) est utilisé pour un transport pile par pile d'articles depuis l'entrée des marchandises (E) et/ou depuis et vers les magasins de stockage.

18. Procédé selon la revendication 16 ou 17, **caractérisé en ce qu'**une unité de manipulation d'articles (6) séparée est utilisée pour effectuer un transport pile par pile et un trans-stockage par pile d'articles, depuis l'entrée des marchandises (E) et/ou depuis et vers des magasins de stockage, et restockée pour effectuer un remplissage élément par élément d'un automate de préparation de commandes par des articles venant de la pile d'articles, dans un dispositif de maintien de pile d'articles (52) orienté en alignement, maintenu de préférence sensiblement verticalement.
